# EUROPEAN PATENT APPLICATION

(11) **EP 4 783 100 A1**
(43) Date of publication of application: **29.07.2026**
(21) Application number: 25169375.0
(22) Date of filing: 09.04.2025
(51) Int. Cl.: G06Q 30/0241, B60K 35/10, B60K 35/28, G06F 3/0486

(54) **METHOD AND APPARATUS FOR PROVIDING VEHICLE INFOTAINMENT BASED ON A 3D VIRTUAL SPACE FOR SEAMLESS HMI IN SDV ENVIRONMENT**

(30) Priority: 23.01.2025 KR 20250010638; 23.01.2025 KR 20250010639; 23.01.2025 KR 20250010640; 23.01.2025 KR 20250010641; 23.01.2025 KR 20250010642
(71) Applicant: Yellowknife Inc., Seoul 06752 (KR)
(72) Inventor: LEE, Han Sung, 06752 Seoul (KR)
(74) Representative: Jung, Minkyu

(57) **Abstract**

A method according to an embodiment of the present disclosure is a method for providing infotainment based on a three-dimensional (3D) virtual space through an in-vehicle display device, wherein the method is performed by a computing device, and the method includes the steps of positioning a first virtual vehicle corresponding to a first real vehicle in the 3D virtual space; positioning a vehicle information display object for the first vehicle in a first area of the 3D virtual space; positioning a content object in a second area of the 3D virtual space; and adjusting and displaying a user view of the 3D virtual space by a touch input to the display device or an in-vehicle control device.

## Description

### CROSS-REFERENCE TO RELATED APPLICATION

This application claims priorities to Korean Patent Application No. 10-2025-0010638, 10-2025-0010639, 10-2025-0010640, 10-2025-0010641, 10-2025-0010642 all filed on 23 January 2025, and all the benefits accruing therefrom under 35 U.S.C. §119, the contents of which in its entirety are herein incorporated by reference.

### BACKGROUND

### 1. Field

The present disclosure relates to a method and apparatus for providing in-vehicle infotainment based on a three-dimensional (3D) virtual space for seamless human-machine interface (HMI) in a software-defined vehicle (SDV) environment. More particularly, the present disclosure relates to a technology that provides new user experiences to a driver and passenger(s) by providing a virtual vehicle and various content in real time in a 3D virtual space based on vehicle state and user information.

### 2. Description of the Related Art

Recently, the automotive industry has developed infotainment systems to maximize interactions between vehicles and passengers. In particular, with the development of virtual reality (VR) and augmented reality (AR) technologies, more attention is being paid to new content providing methods using in-vehicle displays. The existing infotainment systems mainly provide two-dimensional (2D) graphics-based user interfaces, but have limitations in providing intuitive and immersive feelings of content.

### [RELATED LITERATURES]

### [Patent Literatures]

(Patent Literature 1) Korean Patent Publication No. 10-2021-0119010 (2021.10.05)

### SUMMARY

The present disclosure is designed to solve a problem with a lack of immersive and intuitive feelings of the existing two-dimensional (2D) interface-based infotainment systems. The present disclosure is directed to providing a three-dimensional (3D) virtual space through an in-vehicle display device and creating and adjusting a virtual vehicle or content objects in real time based on vehicle state and passenger information to provide information that is best suited for a user. In particular, the present disclosure focuses on increasing convenience and immersive feeling of the vehicle user by providing advertising content and non-advertising content in a customized manner. The problems to be solved by the present disclosure are not limited to the above-described problems, and may be extended to various problems that may be derived by the embodiments of the present disclosure described below.

A method for providing in-vehicle infotainment based on a 3D virtual space for seamless human-machine interface (HMI) in a software-defined vehicle (SDV) environment according to an embodiment of the present disclosure is performed by a computing device, and includes the steps of positioning a first virtual vehicle corresponding to a first real vehicle in the 3D virtual space; positioning a vehicle information display object for the first vehicle in a first area of the 3D virtual space; positioning a content object in a second area of the 3D virtual space; and adjusting and displaying a user view of the 3D virtual space by a touch input to the display device or an in-vehicle control device.

In an embodiment, the content object may include advertising content or non-advertising content, wherein the advertising content may be determined based on a state of the first vehicle, driving information of the first vehicle and passenger information of the first vehicle, and wherein the non-advertising content may include a link for connection to at least one of an email, a messenger, a video, an image or a specific Uniform Resource Locator (URL).

In an embodiment, the non-advertising content may be created by a user in the 3D space, pre-positioned by a service administrator, or automatically created based on at least one of the state of the first vehicle, the driving information of the first vehicle or the passenger information of the first vehicle.

In an embodiment, the method may further include the step of providing a theme change mode for changing a theme of the 3D virtual space, wherein the theme that can be changed may include a theme pre-installed in the vehicle by a manufacturer of the vehicle or a theme downloaded into the vehicle for free or after payment.

In an embodiment, when changing the theme, a location of the vehicle information display object may be maintained based on a location and direction of the first virtual vehicle, and a location, shape and size of the content object may be changed according to attributes of the content object and attributes of the theme.

In an embodiment, a representation of the first virtual vehicle may be determined based on a vehicle information input from a user, and updated based on an image of the first vehicle received from an external device.

In an embodiment, a location and size of the vehicle information display object and the content object in the 3D virtual space may be changed based on a user input, and the user input may include at least one of a drag-and-drop, a short touch, a long touch or a virtual arrow-based manipulation.

In an embodiment, when at least a part of the content object overlaps the vehicle information display object, the content object may be pushed out of the vehicle information display object to avoid the overlap, and a gap between the pushed content object and the vehicle information display object may be determined based on complexity of at least one of the vehicle information display object, the content object or surface in the gap.

A computer program stored in a computer-readable medium according to an embodiment of the present disclosure may enable a computer to perform the above-described method.

The computing device according to an embodiment of the present disclosure may perform the above-described method.

A method for providing infotainment based on a 3D virtual space through an in-vehicle display device linked to external content according to an embodiment of the present disclosure is performed by a computing device, and the method includes the steps of positioning a first virtual vehicle corresponding to a first real vehicle in the 3D virtual space; positioning a vehicle information display object for the first vehicle in a first area of the 3D virtual space; positioning a content object including a link for connection to at least one of an email, a messenger, a video, an image or a specific URL in a second area of the 3D virtual space; and adjusting and displaying a user view of the 3D virtual space by a touch input to the display device or an in-vehicle control device.

In an embodiment, the content object may include a 2D or 3D object, and when the content object is selected by a user, content related to the content object through the link may be displayed overlapping in the 3D virtual space or independently from the 3D virtual space.

In an embodiment, when the content related to the content object is a video, a representation of the content object may be created based on a thumbnail image of the video, or the representation of the content object may be created based on a highlight scene image of the video.

In an embodiment, when the content related to the content object is a video, a volume of the video of the content may be adjusted based on a distance between a reference point of the user view and the content object or a noise level inside the vehicle.

In an embodiment, when the content related to the content object is playing, an icon indicating the content being played may be displayed at a fixed area of the display device, and when the icon is selected, the user view may be changed to face the content object.

In an embodiment, when a call is received at a user terminal related to the vehicle while the 3D virtual space is displayed on the display device, an incoming call menu for the received call may be created in the 3D virtual space.

In an embodiment, the incoming call menu may be created adjacent to a predetermined content object, and the user view may display the incoming call menu and the predetermined content object on the display together.

A method for providing infotainment based on a 3D virtual space through an in-vehicle display device depending on a driving state of a vehicle according to an embodiment of the present disclosure is performed by a computing device, and the method includes the steps of positioning a first virtual vehicle corresponding to a first real vehicle in the 3D virtual space; positioning a vehicle information display object for the first vehicle in a first area of the 3D virtual space; positioning a content object in a second area of the 3D virtual space; adjusting and displaying a user view of the 3D virtual space by a touch input to the display device or an in-vehicle control device; and changing a representation style of the 3D virtual space based on the driving state of the vehicle.

In an embodiment, when the vehicle's gear changes from P to D or starts to move from the D position, the vehicle information display object or vehicle information related to the vehicle information display object may be displayed at an area that is equal to or larger than a predetermined range of the display device or may be displayed in a shape of a floating widget.

In an embodiment, when the vehicle's gear changes from P to D or starts to move from the D position, at least one content object activated in the 3D virtual space and vehicle information related to the vehicle information display object may be configured and displayed on the display device such that they are included in a single scene.

In an embodiment, when the vehicle's gear changes from P to D or starts to move from the D position, content objects displayed in the 3D virtual space may be positioned and displayed on a grid-shaped 2D plane, and an order of the content objects positioned on the 2D plane may be determined based on at least one of a frequency of use by the user, a size in the virtual space or a distance from the vehicle information display object.

In an embodiment, when the vehicle's gear changes from D to P, the 3D virtual space may be displayed again in a reference user view or a predetermined other user view, and driving information collected while the gear is in the D position may be temporarily displayed in the 3D virtual space.

In an embodiment, when the vehicle's gear changes to R, the user view may dynamically move to face the top of the first virtual vehicle, and an image of a surrounding area of the first vehicle may be displayed together with the first virtual vehicle.

In an embodiment, when the vehicle's gear changes to R, the user view may dynamically move to face the top of the first virtual vehicle, and virtual objects corresponding to physical objects acquired based on the image of the surrounding area of the first vehicle may be displayed in the 3D virtual space together with the first virtual vehicle.

A computer program stored in a computer-readable medium according to an embodiment of the present disclosure may enable a computer to perform the above-described method.

The computing device according to an embodiment of the present disclosure may perform the above-described method.

A method for providing infotainment based on a 3D virtual space through an in-vehicle display device for representing a device state of a vehicle according to an embodiment of the present disclosure is performed by a computing device, and the method includes the steps of positioning a first virtual vehicle corresponding to a first real vehicle in the 3D virtual space; positioning a vehicle information display object for the first vehicle in a first area of the 3D virtual space; adjusting and displaying a user view of the 3D virtual space by a touch input to the display device or an in-vehicle control device; and applying and displaying a current state of a driver device of the first vehicle to the first virtual vehicle.

In an embodiment, the driver device may include at least one of tire, seat, steering wheel, air conditioner, headlight, side mirror, rearview mirror or interior light.

In an embodiment, an evaluation value related to the current state of the driver device may be further displayed in the 3D virtual space together with each driver device.

In an embodiment, the method may further include the step of displaying a state of a driving-related device of the first vehicle together with the first virtual vehicle, wherein the driving-related device may include at least one of engine oil, battery, transmission oil, coolant, belt chain, fuel filter, oxygen sensor, diesel particulate filter (DPF), brake oil, brake pad, steering oil, shock absorber or air conditioner filter.

In an embodiment, the state of each driver device and the state of each driving-related device may be selectively displayed based on a frequency of use by the user or a degree of damage.

In an embodiment, the method may further include the step of providing an alarm for any device requiring replacement among the driver device or the driving-related device.

A computer program stored in a computer-readable medium according to an embodiment of the present disclosure may enable a computer to perform the above-described method.

The computing device according to an embodiment of the present disclosure may perform the above-described method.

A method for providing infotainment based on a 3D virtual space for representing an external state of a vehicle according to an embodiment of the present disclosure is performed by a computing device, and the method includes the steps of positioning a first virtual vehicle corresponding to a first real vehicle in the 3D virtual space; adjusting and displaying a user view of the 3D virtual space by a touch input to the display device or an in-vehicle control device; applying a changed external state of the first vehicle to the first virtual vehicle when the external state of the first vehicle is changed; and changing the user view to allow a user to recognize the changed part of the first virtual vehicle.

In an embodiment, the changed user view may be determined based on at least one of a driver view, a passenger view or an external administrator view of the vehicle according to the attributes of the changed part of the vehicle.

In an embodiment, the attributes of the changed part of the vehicle may include at least one of whether the vehicle can drive in the current state, a primary user of the corresponding part of the vehicle, or whether it is possible to visually identify the part in the vehicle.

In an embodiment, the method may further include the step of displaying the changed part of the virtual vehicle in highlight.

In an embodiment, the step of applying the changed external state to the first virtual vehicle may include the steps of identifying a gear state of the vehicle; and applying at least part of the changed external state to the first virtual vehicle based on the identified gear state.

A computer program stored in a computer-readable medium according to an embodiment of the present disclosure may enable a computer to perform the above-described method.

The computing device according to an embodiment of the present disclosure may perform the above-described method.

According to an embodiment of the present disclosure, the three-dimensional (3D) virtual space may be created through the in-vehicle display, and immersive information and content may be provided to the user in real time, thereby innovatively improving user experience. In addition, it is possible to provide optimized services for the user's needs and preferences by providing customized content based on vehicle state, driving information and passenger information. It is possible to provide useful and personalized information to the vehicle user by separately providing advertising content and non-advertising content.

It should be understood that the effects of the present disclosure are not limited to the above-described effects, and may be extended to various effects that may be derived from the detailed description of the embodiments of the present disclosure below.

### BRIEF DESCRIPTION OF THE DRAWINGS

FIG. 1 is a diagram showing an example of an operating environment of a system according to an embodiment of the present disclosure.
FIG. 2 is a block diagram illustrating the internal configuration of a computing device in an embodiment of the present disclosure.
FIG. 3 is a system architecture diagram for performing a method for providing infotainment based on a three-dimensional (3D) virtual space through an in-vehicle display device according to an embodiment of the present disclosure.
FIG. 4 is a diagram illustrating a method for providing in-vehicle infotainment according to an embodiment of the present disclosure.
FIG. 5 is a diagram showing the 3D virtual space described in FIG. 4 when viewed from another user view.
FIGS. 6 to 8 exemplarily show the execution of a virtual object selected by a user in a 3D virtual space.
FIG. 9 is a diagram illustrating a play style of a content object executed by a user in an embodiment of the present disclosure.
FIGS. 10 to 12 are diagrams illustrating a function of changing a theme of a 3D virtual space and a vehicle in an embodiment of the present disclosure.
FIG. 13 is a diagram illustrating a user interface for changing a virtual vehicle in a virtual space according to an embodiment of the present disclosure.
FIGS. 14 and 15 are diagrams illustrating a user interface and function related to virtual object placement in a 3D virtual space according to an embodiment of the present disclosure.
FIG. 16 shows a flowchart of a method for providing infotainment based on a 3D virtual space through an in-vehicle display device according to an embodiment of the present disclosure.
FIG. 17 shows a flowchart of a method for providing infotainment based on a 3D virtual space through an in-vehicle display device according to another embodiment of the present disclosure.
FIG. 18 is a diagram illustrating a call receiving user interface according to an embodiment of the present disclosure.
FIG. 19 is a diagram illustrating a method of displaying content being played in a virtual space in an embodiment of the present disclosure.
FIG. 20 is a flowchart of a method for providing infotainment based on a 3D virtual space through an in-vehicle display device according to another embodiment of the present disclosure.
FIGS. 21 to 23 show that the state of a vehicle driver device and a driving-related device is applied and displayed to a virtual vehicle in the present disclosure.
FIGS. 24 and 25 are diagrams illustrating an alarm or advertisement display function for an item requiring replacement among a driver device or a driving-related device in an embodiment of the present disclosure.
FIG. 26 is a flowchart of a method for providing infotainment based on a 3D virtual space through an in-vehicle display device according to another embodiment of the present disclosure.
FIGS. 27 and 28 exemplarily show that a change of a real vehicle is applied and displayed to a virtual vehicle according to an embodiment of the present disclosure.
FIG. 29 is a flowchart of a method for providing infotainment based on a 3D virtual space through an in-vehicle display device according to another embodiment of the present disclosure.
FIGS. 30 to 33 are diagrams showing a shape change of a 3D virtual space depending on driving state according to an embodiment of the present disclosure.
FIG. 34 and FIG. 35 are diagrams illustrating a method of providing an around view based on a virtual space while driving backwards in an embodiment of the present disclosure.

### DETAILED DESCRIPTION

In describing an embodiment of the present disclosure, when a certain description of well-known elements or functions is deemed to make the subject matter of an embodiment of the present disclosure ambiguous, its detailed description is omitted herein. Additionally, in the drawings, elements irrelevant to the description of an embodiment of the present disclosure are omitted, and like reference signs are affixed to like elements.

In an embodiment of the present disclosure, when an element is referred to as being "connected", "coupled" or "linked" to another element, this may include not only a direct connection relationship but also an indirect connection relationship in which intervening elements are present. Additionally, unless expressly stated to the contrary, "comprise" or "include" when used in this specification, specifies the presence of stated elements but does not preclude the presence or addition of one or more other elements.

In an embodiment of the present disclosure, the terms "first", "second" and the like are used to distinguish an element from another, and do not limit the order or importance between elements unless otherwise mentioned. Accordingly, a first element in an embodiment may be referred to as a second element in other embodiment within the scope of embodiments of the present disclosure, and likewise, a second element in an embodiment may be referred to as a first element in other embodiment.

In an embodiment of the present disclosure, elements that are distinguished from each other are intended to clearly describe the feature of each element, and do not necessarily represent that they are separated from each other. That is, a plurality of elements may be integrated into one hardware or software, and an element may be distributed to multiple hardware or software. Accordingly, although not explicitly mentioned, the integrated or distributed embodiment is included in the scope of embodiments of the present disclosure.

In this specification, a network may be a concept including a wired network and a wireless network. In this instance, the network may refer to a communication network that allows data exchange between a device and a system and between devices, and is not limited to a particular network.

The embodiment described herein may have aspects of entirely hardware, partly hardware and partly software, or entirely software. In this specification, "unit", "apparatus" or "system" refers to a computer related entity such as hardware, a combination of hardware and software, or software. For example, the unit, module, apparatus or system as used herein may be a process being executed, a processor, an object, an executable, a thread of execution, a program and/or a computer, but is not limited thereto. For example, both an application running on a computer and the computer may correspond to the unit, module, apparatus or system used herein.

Additionally, the device as used herein may be a mobile device such as a smartphone, a tablet PC, a wearable device and a Head Mounted Display (HMD) as well as a fixed device such as a PC or an electronic device having a display function. Additionally, for example, the device may be an automotive cluster or an Internet of Things (IoT) device. That is, the device as used herein may refer to devices on which the application can run, and is not limited to a particular type. In the following description, for convenience of description, a device on which the application runs is referred to as the device.

In this specification, the network is not limited to a particular communication method, and a connection between each element may not be made by the same network method. The network may include a communication method using a communication network (for example, a mobile communication network, a wired Internet, a wireless Internet, a broadcast network, a satellite network, etc.) as well as near-field wireless communication between devices. For example, the network may include all communication methods that enable networking between objects, and is not limited to wired communication, wireless communication, 3G, 4G, 5G, or other methods. For example, the wired and/or wireless network may refer to a communication network by at least one communication method selected from the group consisting of Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth, Zigbee, Wi-Fi, Voice over Internet Protocol (VoIP), LTE Advanced, IEEE802.16m, WirelessMAN-Advanced, HSPA+, 3GPP Long Term Evolution (LTE), Mobile WiMAX (IEEE 802.16e), UMB (formerly EV-DO Rev. C), Flash-OFDM, iBurst and MBWA (IEEE 802.20) systems, HIPERMAN, Beam-Division Multiple Access (BDMA), World Interoperability for Microwave Access (WiMAX) or communication using ultrasonic waves, but is not limited thereto.

The elements described in a variety of embodiments are not necessarily essential, and some elements may be optional. Accordingly, an embodiment including some of the elements described in the embodiment is also included in the scope of embodiments of the present disclosure. Additionally, in addition to the elements described in a variety of embodiments, an embodiment further including other elements is also included in the scope of embodiments of the present disclosure.

Hereinafter, the embodiments of the present disclosure will be described in detail with reference to the accompanying drawings.

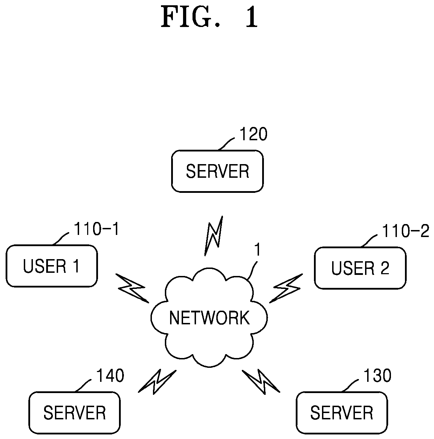

FIG. 1 is a diagram showing an example of an operating environment of a system according to an embodiment of the present disclosure. Referring to FIG. 1, a user device 110 and one or more servers 120, 130, 140 are connected via a network 1. FIG. 1 is provided to describe the present disclosure by way of example, and the number of user devices or servers is not limited to that of FIG. 1.

The user device 110 may be a fixed terminal or a mobile terminal implemented as a computer system. The user device 110 may include, for example, a smart phone, a mobile phone, a navigation, a computer, a laptop, a digital broadcasting terminal, a Personal Digital Assistant (PDA), a Portable Multimedia Player (PMP), a tablet PC, a game console, a wearable device, an Internet of Things (IoT) device, a Virtual Reality (VR) device, or an Augmented Reality (AR) device. For example, in the embodiments, the user device 110 may, in substance, refer to one of various physical computer systems that communicate with the servers 120-140 via the network 1 using a wireless or wired communication method.

Each server may be implemented as a computer device or a plurality of computer devices that provide instructions, codes, files, content or services by communication with the user device 110 via the network 1. For example, the server may be a system that provides each service to the user device 110 having connected via the network 1. As a more specific example, the server may provide the user device 110 with an intended service (for example, information providing, etc.) through an application as a computer program that is installed and executed on the user device 110. As another example, the server may distribute a file for installation and execution of the above-described application to the user device 110 and provide a corresponding service in response to received user input information.

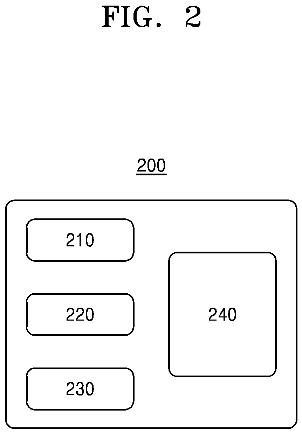

FIG. 2 is a block diagram illustrating the internal configuration of a computing device 200 in an embodiment of the present disclosure. The computing device 200 may be applied to the user device 110 or the servers 120-140 described above with reference to FIG. 1, and each of the device and the servers may have the same or similar internal configuration with an addition or exclusion of some components.

Referring to FIG. 2, the computing device 200 may include a memory 210, a processor 220, a communication module 230, and a transmitter/receiver 240. The memory 210 may include a non-transitory computer-readable recording medium, for example, a permanent mass storage device such as a random access memory (RAM), a read only memory (ROM), a disk drive, a solid state drive (SSD) or a flash memory. Here, the permanent mass storage device such as ROM, SSD, flash memory or disk drive may be included in the above-described device or server as a permanent storage device that is different from the memory 210. In addition, the memory 210 may store an operating system and at least one program code (for example, code for a browser installed and executed on the user device 110, or an application installed on the user device 110 to provide a specific service). These software components may be loaded from a computer-readable recording medium that is different from the memory 210. This computer-readable recording medium may include a computer-readable recording medium such as a floppy drive, a disk, a tape, a DVD/CD-ROM drive or a memory card.

In another embodiment, the software components may be loaded into the memory 210 through the communication module 230, rather than the computer-readable recording medium. For example, at least one program may be loaded into the memory 210 based on a computer program (for example, the above-described application) installed by files provided by developers or file distribution systems (for example, the above-described server) that distribute application installation files via the network 1.

The processor 220 may be configured to process instructions in the computer program by performing basic arithmetic, logical and input/output operations. The instructions may be provided to the processor 220 by the memory 210 or the communication module 230. For example, the processor 220 may be configured to execute the received instructions according to the program code stored in the storage device such as the memory 210.

The communication module 230 may provide a function for communication between the user device 110 and the servers 120-140 via the network 1, and a function for communication between each of the device 110 and/or the servers 120-140 and other electronic device.

The transmitter/receiver 240 may be used for interfacing with an external input/output device (not shown). For example, the external input device may include a keyboard, a mouse, a microphone or a camera, and the external output device may include a display, a speaker or a haptic feedback device.

As another example, the transmitter/receiver 240 may be used for interfacing with a device having a combined input and output function such as a touch screen.

In addition, in other embodiments, the computing device 200 may include a larger number of components than the components of FIG. 2 according to the nature of the device applied. For example, when the computing device 200 is applied to the user device 110, the computing device 200 may include at least some of the above-described input/output devices, or may further include other components such as a transceiver, a Global Positioning System (GPS) module, a camera, many different types of sensors or a database. As a more specific example, when the user device is a smartphone, the computing device 200 may further include various components generally included in smartphones, such as an acceleration sensor or a gyro sensor, a camera module, many different types of physical buttons, buttons using a touch panel, input/output ports or a vibrator for vibration.

The present disclosure relates to a service that provides more personalized experiences to users through three-dimensional (3D) virtual spaces implemented in the field of in-vehicle infotainment systems. In particular, the present disclosure describes a method that allows a user to decorate a virtual space and a virtual vehicle model, change to a personalized user interface (UI) and identify information of a real vehicle and set up tuning in an intuitive manner. In addition, the present disclosure includes a method that implements an interactive user interface for setting an easy access path to external services and content through object-type UI placement.

### Vehicle management service using 3D virtual space

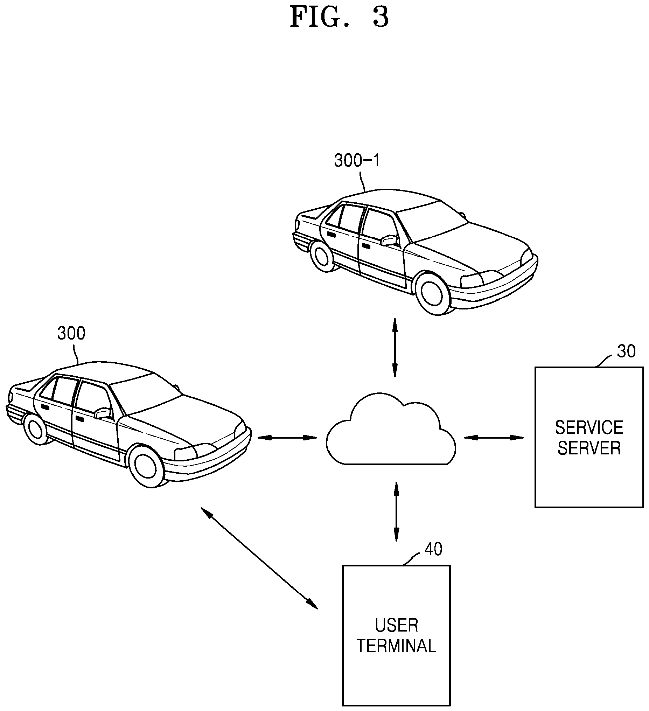

FIG. 3 is a system architecture diagram for performing a method for providing infotainment based on a 3D virtual space through an in-vehicle display device according to an embodiment of the present disclosure. As shown in FIG. 3, a vehicle 300, a service server 30 and a user terminal 40 may be connected to each other via a network to enable communication with each another. In addition, the user terminal 40 and the vehicle 300 may be connected to the service server via short-range communication. In addition, the vehicle 300 may further include an additional vehicle 300-1. That is, one or more vehicles may be included in the implementation of the present disclosure.

In an embodiment, the user terminal 40 may be a terminal device such as a smart phone possessed by a person sitting in the vehicle 300. Here, the person sitting in the vehicle may include not only a driver but also a passenger.

In an embodiment, the service server 30 may receive and process all information related to the vehicle, such as driving information, driver information, location information and component information from one or more vehicles. The service server 30 may provide the vehicle with information received from the vehicle and information (weather, traffic, music, image, advertising content, etc.) received from an external server. The information provided to the vehicle may be represented through objects in the 3D virtual space in the background of the 3D virtual space, and when the user selects the represented object, each information may be executed in the 3D space or through a display space (another display device or a display area that is independent of the virtual space).

In addition, in an example, the service server 30 may provide a function of providing the vehicle 300 with a virtual space theme or object that may be represented in the 3D virtual space, and applying a predetermined theme or object to the 3D virtual space by the vehicle user's selection or automatically. For example, the service server 30 may post the theme or object related to the 3D virtual space via a web or an app such as Google's Play Store or Apple's App Store, and provide free or paid downloads to the vehicle as per the user's request or automatically. The user may access the platform app or the web through an in-vehicle device or the user terminal, to identify the above-described theme or object, and select purchase, rental or subscription and apply it to the 3D virtual space.

In addition, in an example, the service server 30 may provide the vehicle 300 with various vehicle driving mode software, and provide a predetermined driving mode software to the vehicle 300 in response to the vehicle user's selection or automatically. That is, the service server 30 may post the software related to the vehicle driving mode via the web or app such as Google's Play Store or Apple's App Store, and provide free or paid downloads to the vehicle as per the user's request or automatically. The user may access the platform app or web through the in-vehicle device or the user terminal to identify the function and detail of the software related to the vehicle driving mode, and select purchase, rental or subscription.

### Providing in-vehicle infotainment through 3D virtual space

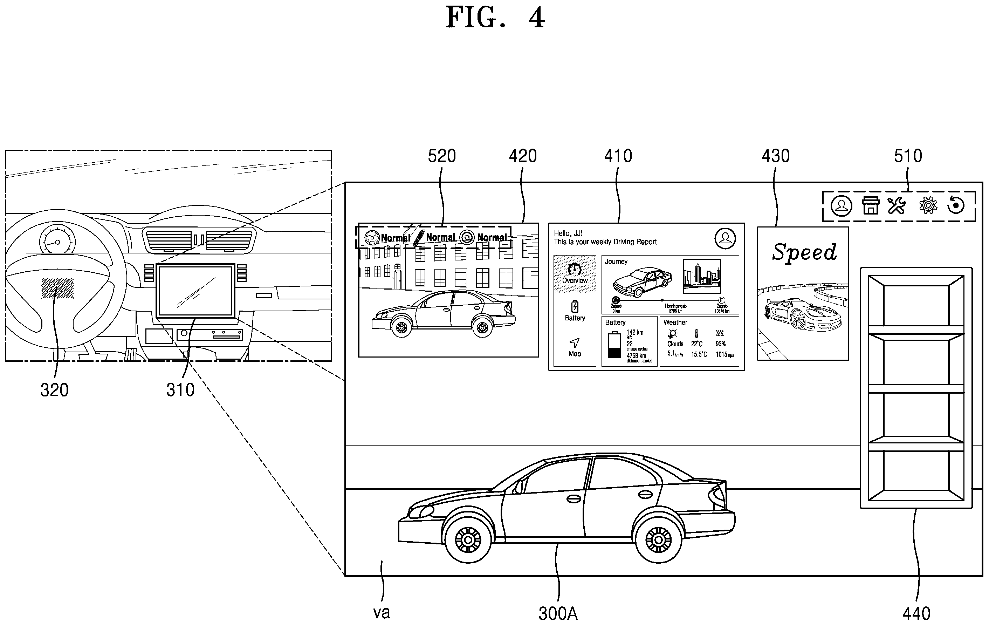

FIG. 4 is a diagram illustrating a method for providing in-vehicle infotainment according to an embodiment of the present disclosure. Referring to FIG. 4, an in-vehicle control device (not shown) may receive various information related to the vehicle and external environment from the service server 30 and display the 3D virtual space VA on the display device 310 of the vehicle. In the 3D virtual space VA, a virtual vehicle 300A corresponding to the real vehicle 300 may be created in 3D and disposed at a predetermined location. In addition, the 3D virtual space may include a vehicle information display object 410 for displaying information associated with the vehicle 300 and one or more content objects 420, 430, 440.... A user view of the 3D virtual space may be adjusted based on a touch input to the display device of the vehicle or a user input to the in-vehicle control device 320. Although FIG. 4 shows that the control device 320 is a steering wheel, this is provided by way of example and the control device may be installed at any location in the vehicle. That is, the user (especially the driver) may identify the virtual vehicle corresponding to his/her vehicle in 3D through the display device inside the vehicle and freely move in the 3D space in which the virtual vehicle is located.

Referring further to FIG. 4, the interior and exterior color and the type and state of the component of the virtual vehicle may be created and updated to the corresponding interior and exterior color and the type and state of the component of the real vehicle 300. Accordingly, the user may easily identify the state of the vehicle 300 in the 3D virtual space. To this end, the user may move the user view in the 3D virtual space through the touch input based on touch-and-drag or two or more touch points.

In an embodiment, in addition to the virtual vehicle, the 3D virtual space may include the vehicle information display object 410. The vehicle information display object 410 may be an area that displays the information related to the vehicle, and the user view may be adjusted to allow the user to recognize the vehicle information display object 410 together with the vehicle when the 3D virtual space starts to be displayed on the display. The vehicle information display object 410 may include the vehicle's remaining battery capacity, tire wear, destination, current location, fuel, engine oil state or user information. The vehicle information display object 410 may be a static image, or may include a dynamic image at least in part. In addition, the vehicle information display object 410 may further include sound information. The volume of the sound information may change based on the distance from a reference point of the user view (a location of a virtual camera in the 3D virtual space).

In this specification, the content objects 420, 430, 440.. may include any representation that may be added, copied, deleted or moved in the virtual space. The content object may come in various types, for example, a still image, a photo, a video, a 3D representation or a two-dimensional (2D) or 3D web page. Referring to FIG. 4, the rack 440 may act as a design element positioned in the virtual space as a content object.

In addition, the content object may be connected to a predetermined web address. For example, content connected to a YouTube video or a Pinterest image, an important part of the connected content or a thumbnail image of the connected content may be positioned in the 3D virtual space as the content object. The content object may be created and positioned in the virtual space by the user, the vehicle manufacturer or the service server's administrator.

Referring further to FIG. 4, the content object 420 may be an advertising content. The content object 420 may include advertising information associated with the vehicle, and more specifically, at least one of a specific image, a web page or a video may be connected to the content object 420 as advertisement information. In an example, the content object 420 may represent a still advertising image or an image or video that changes at a predetermined time interval. In addition, when the user selects the content object 420, the web page connected to the selected content object 420 may be executed. The information associated with the selected content object 420 may be accumulated and charged to the advertiser.

In particular, the advertising content may be determined based on the state of the first vehicle, the driving information of the first vehicle and the passenger information of the first vehicle. For example, the advertising content relevant to the speed of the vehicle while driving, surrounding environment information or an interest that the passenger shows may be determined. The advertising content may be executed by the user's selection, and besides, may be differentially charged to the advertiser depending on the frequency at which the user views or clicks the content object or the advertisement viewing time. In addition, the user view may be adjusted according to the type or size of the advertising content, or the cost that the corresponding advertising content incurs. For example, expensive premium advertisements may be positioned or displayed on the user's display in an enlarged style for emphasis.

In addition to the advertising content, the content object 420 may include non-advertising content, and the non-advertising content may include a link for connection to at least one of an email, a messenger, a video, an image or a specific URL. The non-advertising content may be directly created by the user in the 3D space, or may be pre-positioned by the service administrator, or may be automatically created based on at least one of the state of the first vehicle, the driving information or the passenger information. For example, dynamic content showing vehicle usage history may be created based on the vehicle's driving record, or a music play link that suits the passenger's preference may be provided.

As another example, the content object may be a certain representation that is not related to an advertisement and reflects the user's taste. Referring to FIG. 4, the content object 430 is a movie poster and the content object 440 is a 3D structure. Each content object may link to a specific web page and have any 2D or 3D shape. For example, the user may retrieve a movie poster image file from the web page, position it in the virtual space and insert a link to a specific URL into the movie poster image. In this way, the link to the specific URL may be inserted into the design object 440, not the movie poster image.

The user may create his/her own 3D garage in the virtual space and position the virtual vehicle corresponding to his/her vehicle. In addition, the user may design the surrounding area into the desired shape, and the design may include important information associated with the vehicle and unique design elements that suit his/her taste. Through this, the user may be provided with his/her own unique virtual space, and the corresponding virtual space may be used as a tool that visualizes personalized vehicle information and content in an integrated manner.

In an embodiment, the representation of the virtual vehicle may be determined based on the vehicle information input from the user, and updated based on the image of the real vehicle received from the external device. Through this, the user may see more realistic vehicle representation in the virtual space. In addition, a theme change mode for changing the theme may be provided in the 3D virtual space, and the user may select the pre-installed theme by the vehicle manufacturer or apply the downloaded theme for free or after payment. When changing the theme, the location of the vehicle information display object may be maintained based on the location and direction of the virtual vehicle, and the location, shape and size of the content object may be changed according to the attributes of the content object and the attributes of the theme. For example, when the high-resolution theme is applied, the content object may be represented in the 3D space in a more stereoscopic and realistic manner.

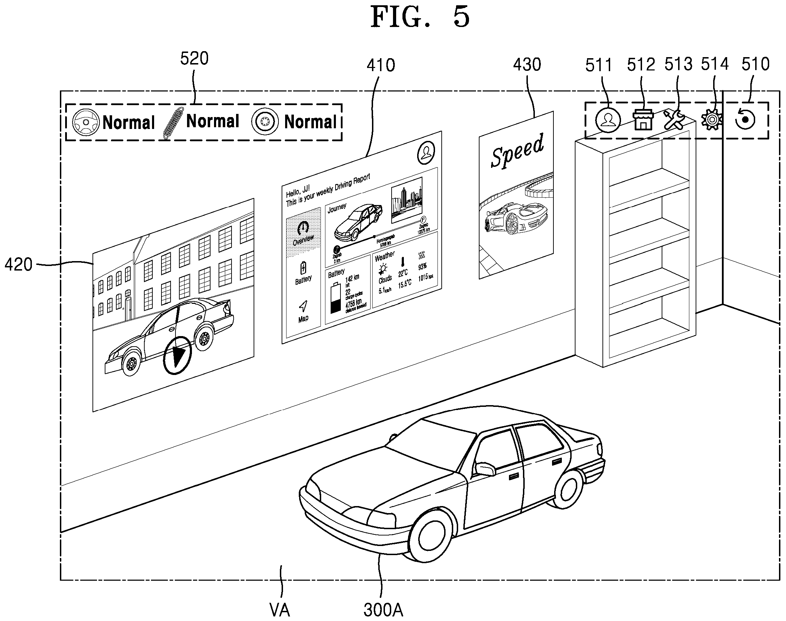

FIG. 5 is a diagram showing the 3D virtual space described in FIG. 4 when viewed from another user view. As the user view changes, as opposed to FIG. 4, the content object 440 is not displayed on the display. Meanwhile, the user may visually identify the rear of the virtual vehicle by the movement of the user view. The change of the user view in the 3D virtual space may be primarily limited so that the virtual vehicle is included in the user view. That is, the limitation may be placed so that at least part of the virtual vehicle is necessarily included and displayed on the display. However, the limitation may be removed when the user additionally requests for the movement of the user view (for example, a touch-and-drag). The limitation may help the user view naturally stay in a specific area of the 3D virtual space. Because the manipulation of the display in the vehicle may cause a dangerous situation, regulating the unlimited movement of the user view may help solve this problem.

Referring to FIG. 5, the 3D virtual space may display a user control area 510 or a driving mode control area 520 in a fixed area for the user convenience when the user uses the 3D virtual space. The user control area 510 may include a user information icon 511 showing driver/owner information of the virtual vehicle currently in the virtual space, a market icon 512 for purchase of the content object or theme that may be applied to the virtual space for free or after payment, a vehicle state icon 513 showing the vehicle state, and a setting icon 514 for changing the settings of the 3D virtual space. In addition, the driving mode control area 520 may include driving-related icons of steering wheel, suspension or brakes as driving-related devices. When each driving-related icon is selected, the currently set driving mode of each driving-related device is displayed. The user may change the driving mode by selecting the driving-related device or the currently set driving mode. In addition to the steering wheel, the suspension and the brakes, the driving-related device may include engine, transmission, vehicle stability control (VSC) system, anti-lock braking system (ABS), drivetrain or electronic driving assistance system (ADAS). The present disclosure is not limited to the devices listed in FIG. 5.

In an example, the in-vehicle computing device (the above-described control device) may provide two or more driving modes of the driving-related device of the vehicle. Subsequently, the mode of the driving-related device is set to the driving mode selected by the user among the provided driving modes, and the computing device may operate the driving-related device in the set mode. The user selects and sets one of the provided modes, and the driving-related device operates according to the set mode. By selecting the driving mode, the driver may optimize the performance of the vehicle according to the driving environment or his/her driving tendency. In an embodiment of the present disclosure, the two or more driving modes provided to the vehicle through the service server may include a basic driving mode that is installed as a default when the vehicle is manufactured and an additional driving mode that is applied to the vehicle after the vehicle is manufactured and transported. In addition, in an embodiment of the present disclosure, the service server may provide the additional driving mode that is not installed or applied to the vehicle when the vehicle is transported, but is applied after transport. Here, the provided driving modes may be displayed on the in-vehicle display through the in-vehicle computing device. The additional driving mode may include a user-purchasable driving mode that is activated so as to be applied to the vehicle based on the user purchase through the above-described platform. In addition, the additional driving mode may further include an automatic update driving mode that is automatically activated so as to be applied to the vehicle by vehicle software updates, irrespective of the user purchase. That is, the user-purchasable driving mode and the automatic update driving mode as used herein are driving modes applied to the vehicle based on the user's intention or action, and have different characteristics from the driving modes that are already installed at the time of transport or automatically added by the manufacturer by vehicle software updates. The user-purchasable driving mode may be produced by various developers other than the manufacturer so that each driving-related device may exhibit characteristic performance based on various sensor information and driving information of the vehicle. For example, the user may have various driving experiences through various driving mode software, like capturing images with different textures according to various camera apps of the smartphone.

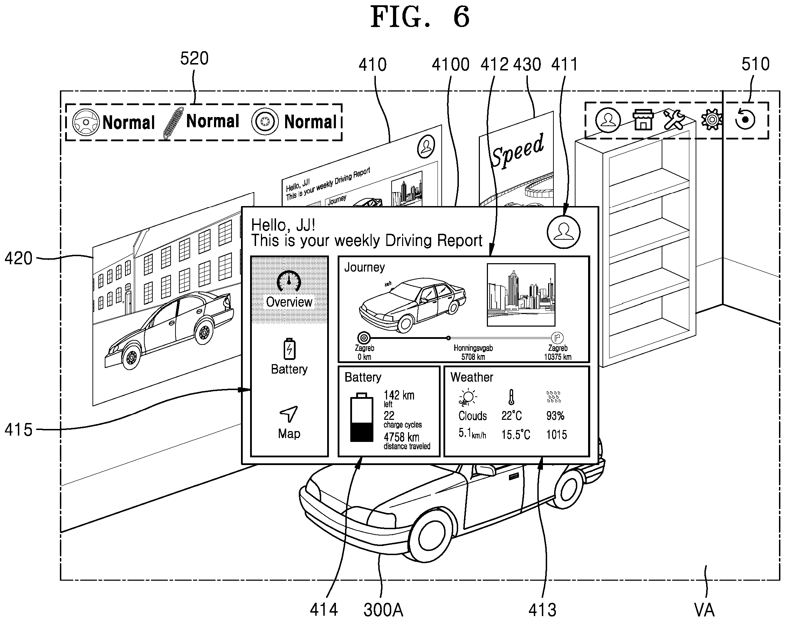

FIGS. 6 to 8 exemplarily show the execution of the virtual object selected by the user in the 3D virtual space. FIG. 6 shows a vehicle information board 4100 displayed on the display when the vehicle information display object 410 is selected. The vehicle information board 4100 may include details that are the same or different from the vehicle information display object 410. The vehicle information board 4100 may include the user information 411, the location-related information of the vehicle 412, the surrounding environment information of the vehicle 413 (weather, etc.), the remaining battery level 414 of the vehicle and the vehicle state information 415. Each element may be displayed on the vehicle information board, and the content in the vehicle information board may be changed to display detailed information by the user selection, or information displayed on the display may be moved to a specific URL.

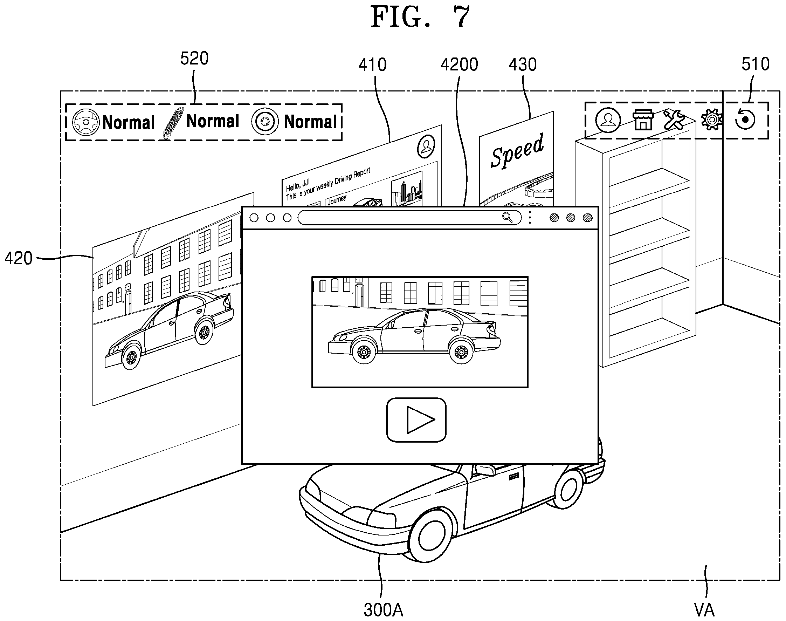

Referring to FIG. 7, it shows a state in which the content object 420 in FIG. 4 has been selected. The web page related to the content object 420 may be displayed as a pop-up in the virtual space, and the corresponding web page may be executed. The executed web page may be set to immediately play a video as shown in FIG. 7. Alternatively, only a video file may be retrieved from the corresponding web page and played in the content object itself in the 3D virtual space. That is, the web browser is not be displayed as a pop-up, and the content object itself may be changed from a still image to a video. That is, referring back to FIG. 5, as can be recognized from the video play icon displayed on the content object 420, the area of the content object 420 may be changed to a video play area as if there is a wall-mounted TV in the 3D virtual space.

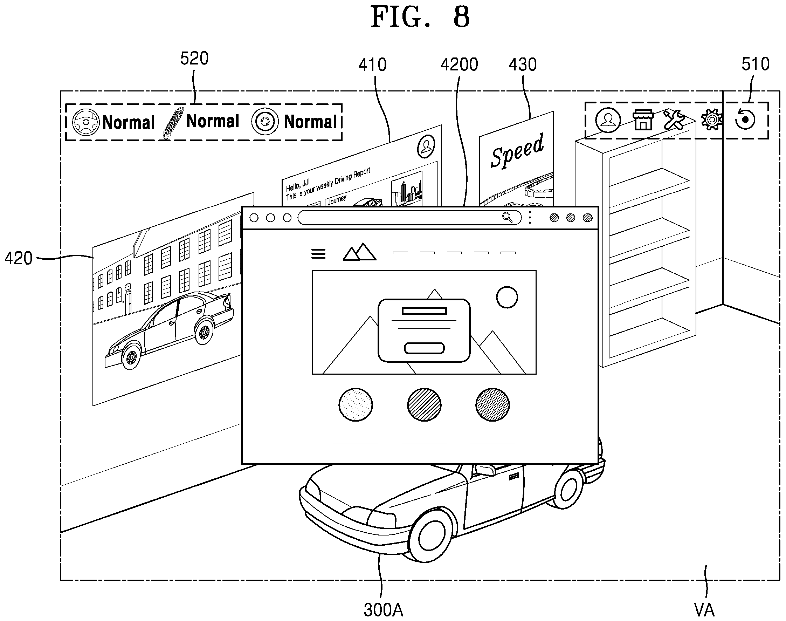

FIG. 8 depicts another embodiment of the present disclosure, and shows a state in which a general web page linked to a specific content object is displayed, instead of a video. Referring to FIG. 8, the specific advertising web page 4200 may be connected to the content object and displayed. The user may identify the detail of the corresponding web page in person, or move to another web page through touch manipulation, or move the current browser window to a desired location in the 3D virtual space. Through this interface, the user is provided with a function of freely placing and manipulating the browser in the virtual space, beyond simply viewing the web page.

The web page 4200 may be selected by a long touch or other user input method. The selected web page may be displayed on the browser, and may be changed to the content object that may be positioned in the 3D virtual space. This is a new way in which the user may actively utilize the content in the virtual space, beyond simply consuming the specific content. For example, the user may open a first web page by executing content object 1, identify necessary information on the corresponding web page, and move to a second web page. Subsequently, the user may select a browser window that displays the second web page, and change to a new virtual object in the 3D virtual space and position it.

In addition, these functions allow reconfiguration of the visual elements of the web page in the virtual space or adjustment to suit the user environment. The user may configure his/her own virtual space by adjusting the size, location or direction of the web page, and through this, may be provided with more intuitive and personalized experience in the 3D virtual space. For example, the advertising web page may be positioned in connection to the specific content object, or may be utilized in a creative way through various user interface manipulations.

This embodiment provides interactive experience to the user by allowing the user to position the content in the virtual space in person and use it, beyond the traditional method of simply consuming the content via the web browser. This method may enrich the user's interaction with the virtual space and expand the scope of usage of the content.

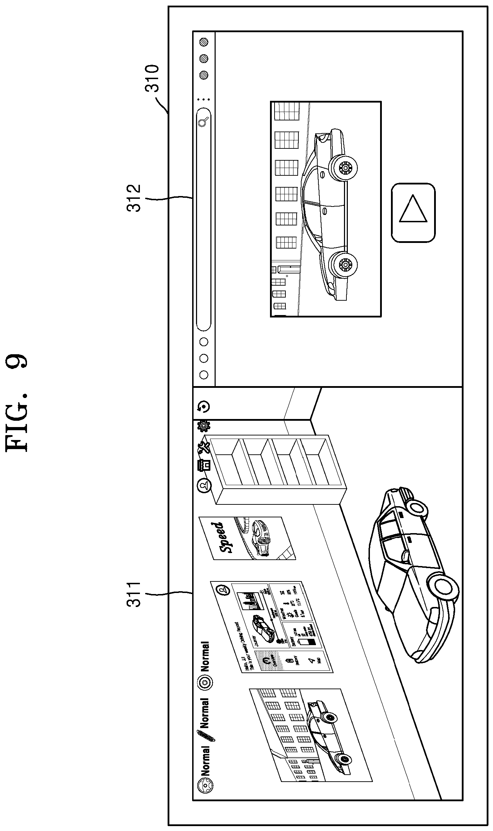

FIG. 9 is a diagram showing the play style of the content object executed by the user is played in an embodiment of the present disclosure. In an example, the content object executed by the user may be displayed and played in the 3D virtual space and a separate area. As shown in FIG. 9, each of the area 311 of the 3D virtual space and the web page area 312 related to the content object being executed may be independently positioned on the display device 310. This change of the display area may help the user see the detail of the content object being executed through a larger display area.

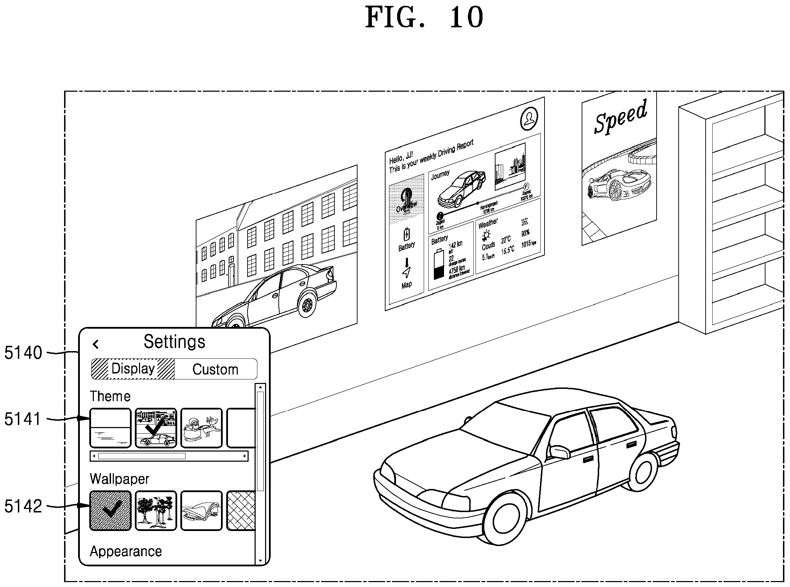

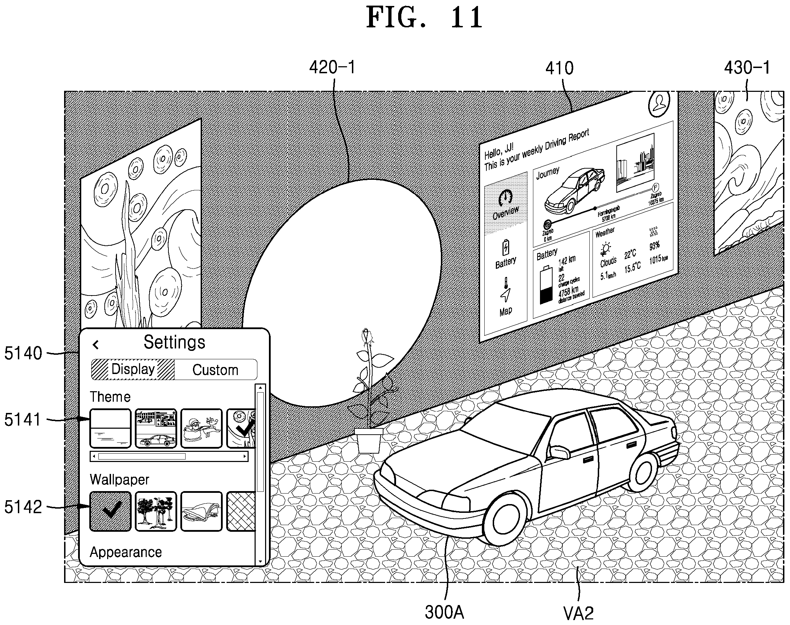

FIGS. 10 to 12 are diagrams illustrating the function of changing the theme of the 3D virtual space and the vehicle in an embodiment of the present disclosure. Referring to FIG. 10, a setting menu 5140 may provide various themes 5141 and wallpapers 5142 for the 3D virtual space. Here, the provided themes and wallpapers may be preset or newly added for free or after payment. First, the theme 5141 refers to a theme of an indoor space (the virtual garage space) where the vehicle is located in the 3D virtual space. Referring to FIG. 11, it shows a state in which the changed theme is applied to the 3D virtual space. Through the theme change, the user may customize his/her own space for the 3D virtual space and create various atmospheres. Meanwhile, the wallpaper 5142 represents the exterior of the garage space of the vehicle in the 3D virtual space. Accordingly, when the wallpaper changes, the lighting changes, and the change in illuminance may change the illuminance of the garage space depending on the shape of the garage space (the number or location of windows, etc.). Additionally, the wallpaper may dynamically and automatically change based on the current weather. Meanwhile, by moving the user view, the outside beyond the garage space may be seen, or when the user view moves into the interior space of the vehicle, the interior of the vehicle may be displayed on the display.

Referring further to FIG. 11, a new virtual space VA2 is displayed according to the changed theme. The change of the theme may maintain the relative position of the vehicle information display object 410 and the virtual vehicle, but the shape and presence of other content object may be changed. That is, when the theme is changed to a different theme, the content object may be changed to fit the corresponding theme, or may be deleted. In the case of FIG. 11, a circular design element may be positioned on the side of the vehicle information display object 410, and the content object 420 positioned in the virtual space of FIG. 10 may be changed to a design display element 420-1. In this case, although not shown in FIG. 11, at least a part of the detail of the content object 420 may be applied and displayed to a part of the display element 420-1 to allow the user to recognize that the corresponding area is a content object.

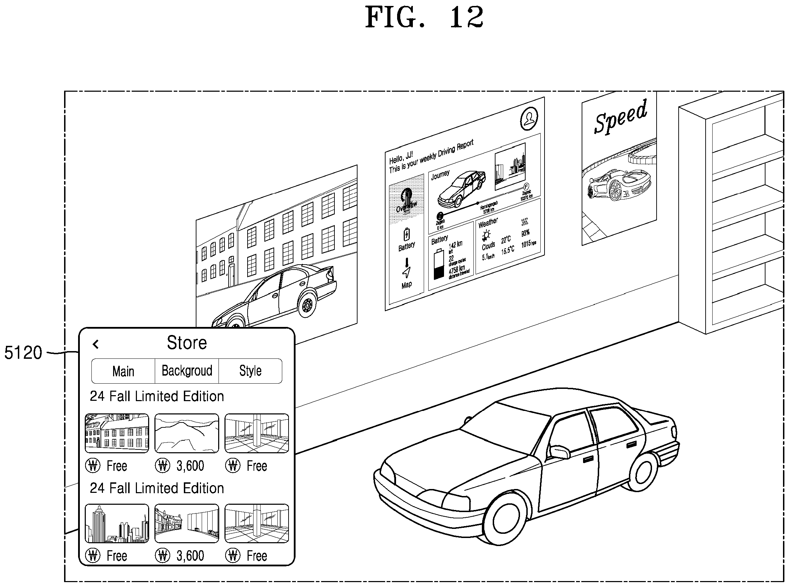

Additionally, referring to FIG. 12, various themes or wallpapers (further including virtual objects, etc.) for the 3D virtual space may be pre-created and provided to the user through the Store for free or after payment. The purchase of paid themes or wallpapers (or virtual objects, etc.) may be made through various means, for example, bank transfer, card or simple payment. Additionally, in an embodiment of the present disclosure, the web link for each virtual space may be provided to each user, and the number of times a third party who visits each virtual space watches or selects advertisements provided in the corresponding virtual space may be counted and a sort of reward may be provided, and through the reward, the themes may be purchased from the Store. That is, the virtual space as described herein may be accessed not only by the owner or driver of the vehicle but also the third party. However, the third party may have the limited editing authority.

### User interface in 3D virtual space

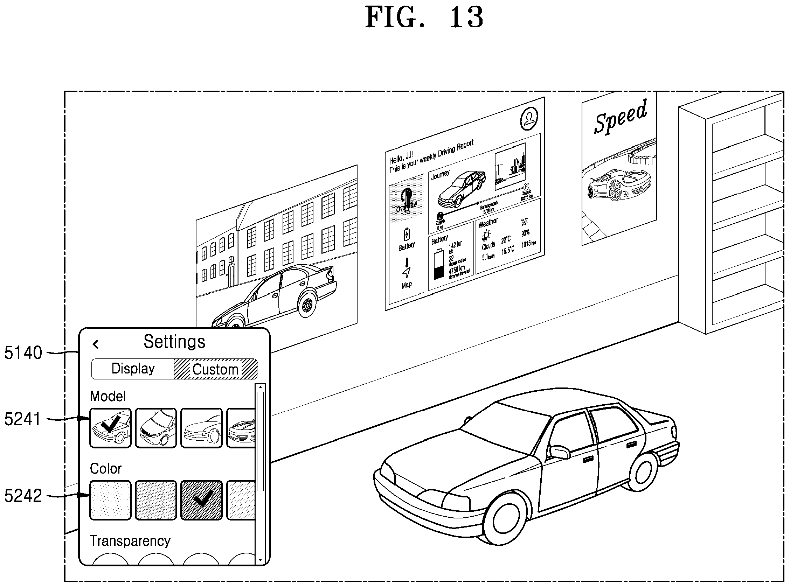

FIG. 13 is a diagram illustrating the user interface that changes the virtual vehicle in the virtual space according to an embodiment of the present disclosure. Referring to FIG. 13, the user may change the vehicle type 5241 and color 5242 of the virtual vehicle through the setting menu 5140. The vehicle type 5241 that can be changed may be limited to the virtual vehicle corresponding to the real vehicle that the user who has logged in to the corresponding service actually owns or has registered with the service, and any vehicle may be provided without limitation. Hereinafter, the case where the real vehicle is registered by the user will be described.

Referring to FIG. 13, the user who possesses two vehicles may freely decorate the garage in the 3D virtual space according to his/her personal style and preference. The user may position the virtual vehicle that is identical to the real vehicle in the virtual space, or replace and position the virtual vehicle as needed. When the virtual vehicle is added, each vehicle information display object corresponding to each vehicle may be additionally created in the virtual space. Alternatively, in a situation in which the plurality of virtual vehicles is displayed, when the user selects a specific vehicle, the detail of the vehicle information display object may be automatically updated and displayed to match the corresponding selected vehicle.

In the case where vehicle A and vehicle B are positioned in the virtual space, when the user selects vehicle A, the vehicle information display object displays information of vehicle A (for example, vehicle model name, year, distance traveled, etc.). Subsequently, when the selection is changed to vehicle B, the display object is updated to information of vehicle B to allow the user to identify the detailed information of each vehicle quickly. This function is useful when the user manages the plurality of vehicles at the same time, and is designed to identify the vehicle information in the virtual space efficiently and intuitively.

In addition, the color of the vehicle is automatically set based on the photo, vehicle number or other input values provided by the user when registering the service. For example, when the user registers black vehicle A, the color of vehicle A in the virtual space is equally displayed in black. However, the user may freely change the color of the vehicle in the virtual space and identify the changed color in real time. Beyond simply changing the color, this function helps the user simulate the color of the vehicle he/she is considering purchasing or take into account the harmony between the vehicle that he/she owns and another vehicle that he/she is planning to purchase. For example, when the user who owns black vehicle A plans to purchase vehicle B, the user may position vehicles A and B side by side in the virtual space and select the color that best matches the color of vehicle B while changing the color of vehicle B to various colors. In this process, the user may visually compare the external harmony of vehicles A and B and decide the color of vehicle B with certainty before purchasing. For example, the user may make the best choice while changing the color of vehicle B to white, silver or metallic color that matches the black color of vehicle A.

Additionally, the vehicle placement in the virtual space is another element that shows the user's creativity. The user may position the vehicles, and besides, may adjust the location and direction of vehicles or apply various themes to create a creative garage. Through this, the user may create the virtual space reflecting his/her tastes and styles, beyond simply managing the vehicle information. The virtual space may be useful for visually managing the vehicle information, and in the process of deciding the color and design when purchasing a new vehicle.

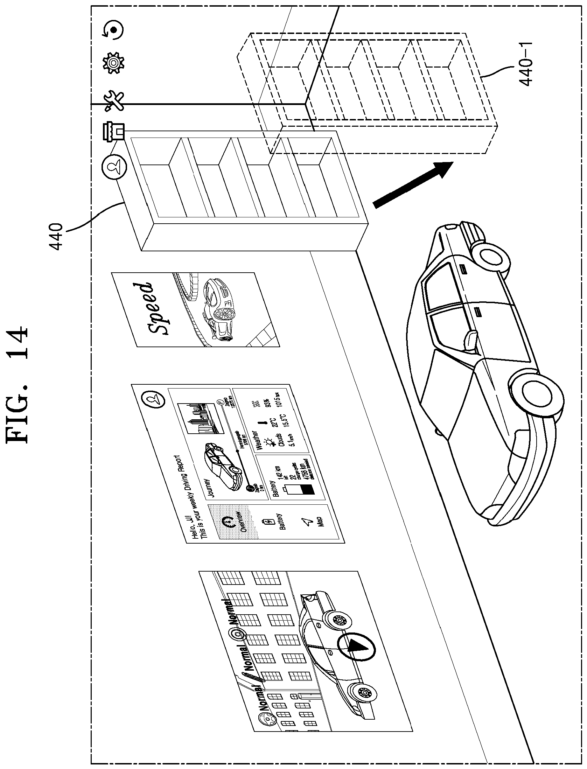

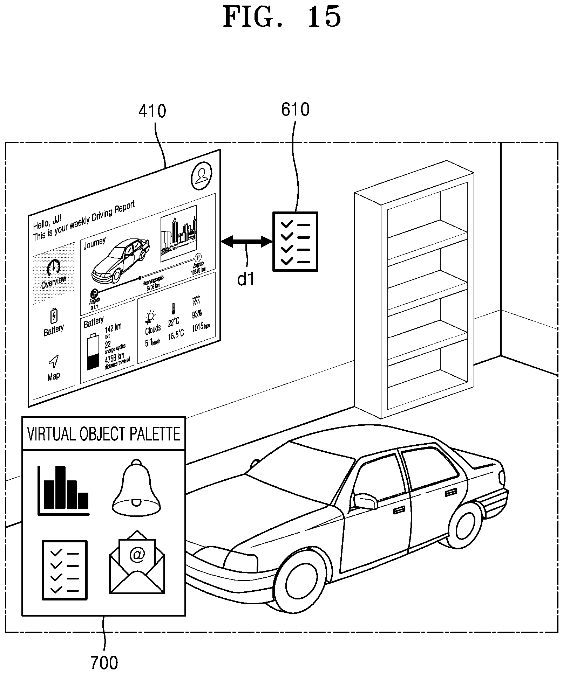

FIGS. 14 and 15 are diagrams illustrating the user interface and function related to virtual object placement in the 3D virtual space according to an embodiment of the present disclosure. Referring to FIG. 14, the location and size of the vehicle information display object and the content object in the 3D virtual space may be changed based on the user input, and the user input may include at least one of drag-and-drop, short touch, long touch or virtual arrow-based manipulation. Referring further to FIG. 14, the content object (i.e., the virtual object) may be moved from a first location to another location 440-1 through the user input (for example, drag-and-drop, etc.). In this instance, the user view may be fixed to a state before the movement or automatically adjusted to zoom out or zoom in depending on the size of the content object being moved.

Additionally, referring to FIG. 15, in an example, the 3D virtual object may be positioned on the virtual space when a variety of candidate objects are displayed through a virtual object palette 700 and the user may select any one of the candidates. The virtual object may be positioned at a location selected by the user, but may be, in part, automatically adjusted based on the location selected by the user and a relationship with the surrounding content object (or the vehicle information display object). Specifically, when the content object that is newly created in the virtual space or positioned at the specific location (by movement) overlaps the vehicle information display object at least in part, the content object may be automatically pushed out of the vehicle information display object, and in this instance, a gap (d1) between the content object 610 and the vehicle information display object 410 may be determined based on complexity of at least one of the vehicle information display object, the content object or surface in the corresponding gap (i.e., the surface tree pattern area between 410 and 610). Specifically, the newly positioned virtual object 610 may not hide the vehicle information display object 410 at any user view, and does not need to reduce the user's visibility of the vehicle information display object at a close location. To this end, the content object positioned near the vehicle information display object may be automatically adjusted to be spaced a predetermined distance apart based on the surrounding situation. Through this, the content object and the vehicle information display object may provide the optimized visual experience to the user without interferences.

### First embodiment

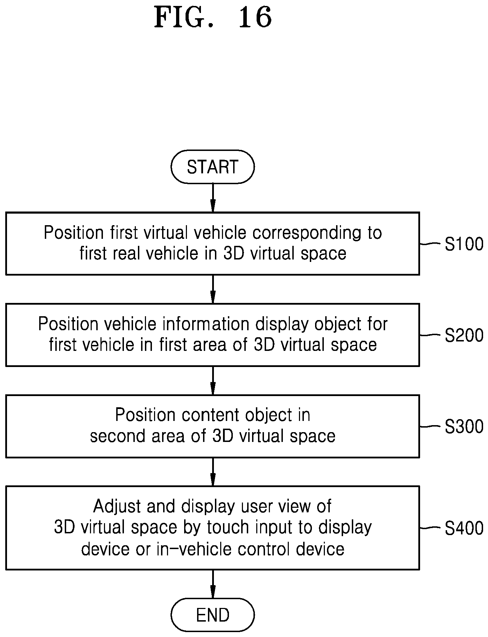

FIG. 16 shows a flowchart of the method for providing infotainment based on the 3D virtual space through the in-vehicle display device according to an embodiment of the present disclosure. The method may be performed by the display device, the control device or the service server in the vehicle, and specific step(s) may be fully performed in the vehicle, or all or some of specific steps may be performed via connection with a cloud server.

Referring to FIG. 16, the method includes the step (S100) of positioning the first virtual vehicle corresponding to the first real vehicle in the 3D virtual space. In this step, the first virtual vehicle is created, reflecting the appearance and characteristics of the vehicle possessed or used by the user. When the user positions the virtual vehicle in a certain space such as the garage or a road in the virtual space, the user may identify the information related to the vehicle more intuitively.

In the subsequent step (S200), the vehicle information display object associated with the first vehicle is positioned in a first area of the 3D virtual space. The vehicle information display object includes main information such as the vehicle model, year, distance traveled and fuel state, and is configured to allow the user to visually identify the same in the virtual space. The vehicle information display object may be positioned in connection with the location of the virtual vehicle, and updated in real time in the virtual space.

Subsequently, the step (S300) of positioning the content object in a second area of the 3D virtual space is performed. The content object may include advertising content or non-advertising content, and the advertising content is determined based on the state of the first vehicle, the driving information or the passenger information. For example, highly relevant advertisement may be provided as the content object according to the fuel state of the vehicle or the interest that the passenger in the vehicle shows. The non-advertising content may include an email, a messenger, a video, an image or a link for connection to a specific URL, and may be created by the user in person, positioned by the service administrator or automatically created according to the state of the vehicle.

In addition, the step (S400) of displaying the virtual space by adjusting the user view through the touch input to the display device or the control device in the vehicle is included. The user may change the location and size of the object in the 3D virtual space through drag-and-drop, short touch, long touch or virtual arrow-based manipulation. The user interface is designed intuitively and flexibly to support the user to manipulate the virtual space in a desired manner.

The method may further include the step of changing the theme of the virtual space. The user may change the visual configuration of the virtual space by selecting the theme provided beforehand by the vehicle manufacturer or applying the theme downloaded for free or after payment. When changing the theme, the location of the vehicle information display object may be maintained based on the location and direction of the first virtual vehicle, and the location, shape and size of the content object may be changed according to the attributes of the content object and the attributes of the theme. In addition, the representation of the first virtual vehicle in the virtual space may be determined based on the vehicle information input from the user, and updated based on the image of the first vehicle received from the external device. The user may change external elements such as the color of the vehicle, and identify the changed color in real time in the virtual space. For example, the user may position black vehicle and white vehicle in the virtual space and combine the colors of the two vehicles to support a decision to purchase a new vehicle.

In particular, when the content object and the vehicle information display object overlap, the content object is automatically re-positioned to maintain the gap with the vehicle information display object. In this process, the gap is determined based on complexity of the vehicle information display object, the content object and the surface in the corresponding gap. Through this, it may be possible to prevent visual interferences between objects and provide the optimized view to the user.

### Second embodiment

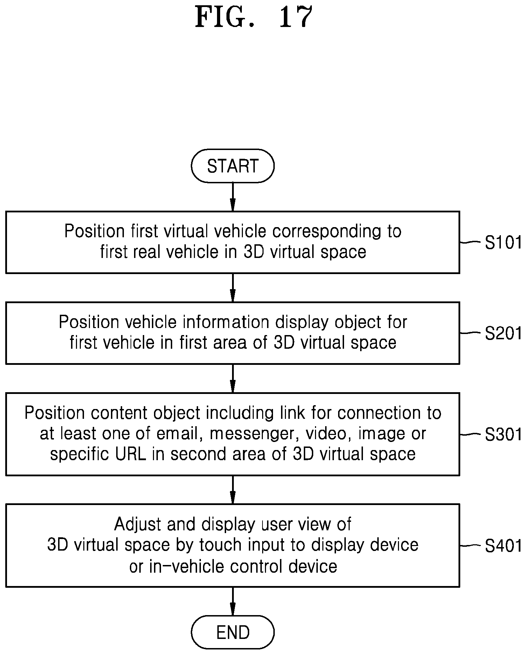

FIG. 17 shows a flowchart of the method for providing infotainment based on the 3D virtual space through the in-vehicle display device according to another embodiment of the present disclosure. Referring to FIG. 17, the method for providing infotainment based on the 3D virtual space through the in-vehicle display device may include the step (S101) of positioning the first virtual vehicle corresponding to the first real vehicle in the 3D virtual space, the step (S201) of positioning the vehicle information display object for the first vehicle in the first area of the 3D virtual space, the step (S301) of positioning the content object including the link for connection to at least one of an email, a messenger, a video, an image or a specific URL in the second area of the 3D virtual space, and the step (S401) of adjusting and displaying the user view of the 3D virtual space by the touch input to the display device or the in-vehicle control device.

This method may be performed by the in-vehicle display device or the computing device connected to the vehicle, and allow the user to intuitively experience various information and content in the virtual space. In an embodiment, the in-vehicle computing device or the service server positions the first virtual vehicle corresponding to the first real vehicle in the 3D virtual space. The first virtual vehicle may be created, reflecting the appearance and characteristics of the real vehicle that the user possesses or drives, and positioned at a specific location in the virtual space. For example, the user may position the first virtual vehicle in his/her virtual garage.

Subsequently, the vehicle information display object related to the real vehicle may be positioned in a specific area of the virtual space. The vehicle information display object includes the vehicle model, year, distance traveled, fuel state and other vehicle state data, and intuitively provides the vehicle state to the user. For example, the user may identify the distance traveled data in the virtual space, or identify the fuel state to determine the time to refuel. The vehicle information display object may support real-time data updates to immediately reflect changes in the vehicle state.

In addition, the content object including the link for connection to at least one of an email, a messenger, a video, an image or a specific URL may be positioned in other area of the virtual space. The content object may be formed in 2D or 3D, and the user may select the content object to execute or identify the related content. For example, when the user selects the content object linked to a video in the virtual space, the corresponding video may be displayed overlapping in the virtual space, or may be independently executed in a new window. When the user selects an email content object, the user may identify the detail of the email and reply to the email in the virtual space. In the case of the video content object, a representation of the content object is created based on a thumbnail image or highlight scene of the video. For example, in the case of the vehicle-related advertising video content, a main scene of the corresponding video is created as a highlight image to allow the user to easily understand the content. When the video content is playing, the volume of the content being played is automatically adjusted based on the distance between the reference point of the user view and the content object or the noise level inside the vehicle. For example, when the location of the virtual camera in the virtual space that determines the user view is close to the content object, the volume increases, and when the location of the virtual camera is far away from the content object, the volume decreases, thereby improving user experience.

In addition, in an example, when the content is playing, an icon indicating the on-playing state may be displayed in a fixed area of the display device. The user may intuitively identify the on-playing state of the content through the icon, and when the icon is selected, the user view is changed to the content object direction, and the virtual space is reorganized with respect to the corresponding content. This function allows the user to efficiently explore and manage multiple content in the virtual space.

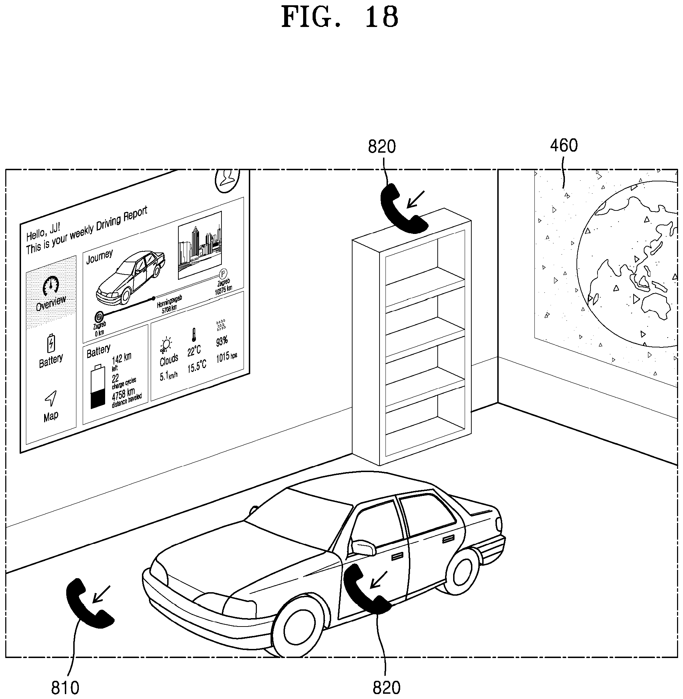

FIG. 18 is a diagram illustrating a call receiving user interface according to an embodiment of the present disclosure. Referring to FIG. 18, when a call is received at the user terminal connected to the vehicle or the vehicle itself (when the vehicle has a call reception identifier, etc.) while the virtual vehicle is displayed in the 3D virtual space, an incoming call menu may be displayed inside (or overlapping) 820 and/or outside 810, 830 of the virtual vehicle. The incoming call menus displayed inside and outside the virtual vehicle may have different functions. For example, when the incoming call menu displayed inside the virtual vehicle is selected, the received call may be automatically connected to the vehicle speaker and microphone (usually a Bluetooth connection but not limited thereto), and when the incoming call menu displayed outside the virtual vehicle is selected, the call may be received at the user terminal in the vehicle or the vehicle speaker/microphone according to the settings of each incoming call menu. For example, when the incoming call menu 810 outside the virtual vehicle is selected, the call may be received at the user terminal, not the vehicle, and the vehicle speaker and microphone may not be executed. Meanwhile, in another example, when the incoming call menu 810 is dragged to the vehicle, the vehicle speaker/microphone may be turned on and receive the call in the same way as the incoming call menu 820 having been selected.

As another example, the incoming call menu 830 may be positioned adjacent to a predetermined content object 460 and configured to give an alarm. The predetermined content object 460 may display caller information (phone number, saved name, memo, etc.) or advertising information related/unrelated to the caller. When the user sees the display to select the incoming call menu, the advertisement may be intentionally positioned adjacent to the incoming call menu.

As described above, the incoming call menu may be created in harmony with the existing content in the 3D virtual space, and the user may decide whether to receive a call. For example, when the incoming call menu is created near a specific content object, the user view may be adjusted to display the incoming call menu and the corresponding content object at the same time. Through this, the user may intuitively identify the content and whether to receive a call, and manipulate them at the same time, and when the content object is an advertisement, the user may watch the advertisement.

The method of providing infotainment based on the 3D virtual space intuitively provides the vehicle state information, video content, email and other content, and optimizes interactions with the user. In addition, it may be possible to manage all the various elements such as the location and representation of the content object, playback state, user view change or incoming call menu display, thereby improving user convenience and experience.

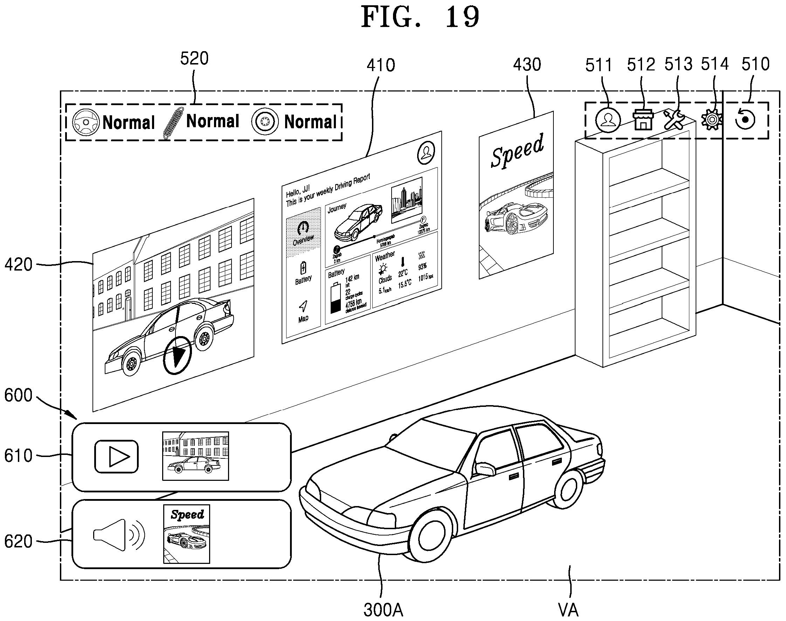

FIG. 19 is a diagram illustrating the method of displaying content being played in the virtual space in an embodiment of the present disclosure. In an embodiment of the present disclosure, when the content related to the content object is playing, the icon indicating the content being played may be displayed in the fixed area of the display device. In addition, when the icon is selected, the user view may be changed to face the content object. Referring to FIG. 19, at least one content object may be executed in the form of a video in the 3D virtual space. In this instance, because the video being played is positioned at various locations in the 3D space, it may be necessary to stop the execution of each content object or adjust the volume. For convenience of manipulation, in an embodiment of the present disclosure, icons 600: 610, 620 for video or audio content being played in the 3D virtual space may be displayed in the fixed area of the display, to allow the user to easily access each content even when there is a change of the user view in the 3D virtual space. For example, when the content icon 610 is selected, the user view may be changed to face the content object 420 associated with the content icon 610. This change may be represented dynamically. Taking FIG. 19 as an example, the user view may be dynamically changed as if the user moves toward the content object 420 at the user view of FIG. 19. Accordingly, the user may select the content object 420 to reduce the volume or stop playing. Meanwhile, the function of controlling the volume or stopping playing may be performed immediately through a virtual button (not shown) added to the content icon 610.

### Dynamically providing vehicle driver device information in 3D virtual space

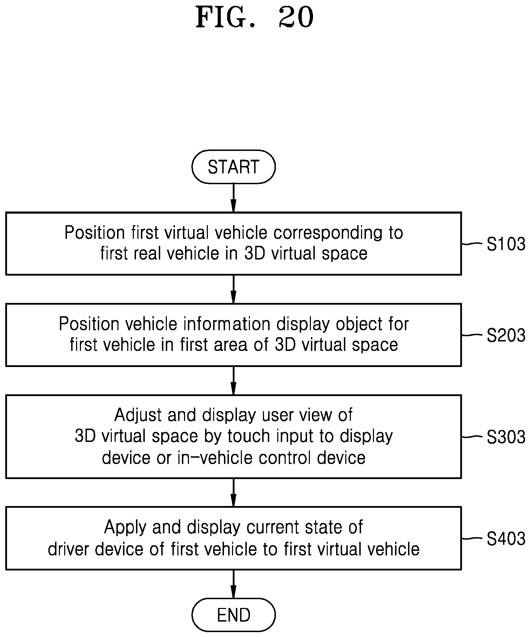

FIG. 20 is a flowchart of the method for providing infotainment based on the 3D virtual space through the in-vehicle display device according to another embodiment of the present disclosure. The method may be performed by the computing device connected to the in-vehicle display device, and designed to allow the user to identify the information related to the vehicle intuitively in real time.

In an example, the service server or the in-vehicle control device may position the virtual vehicle corresponding to the real vehicle in the 3D virtual space (S103). The virtual vehicle may be created, reflecting the appearance and characteristics of the real vehicle that the user possesses or drives. Through this, the user may position his/her vehicle at a specific location in the virtual space and visually identify the external characteristics or additional information of the corresponding vehicle. For example, the user may identify the vehicle state by positioning his/her vehicle in the virtual garage or on the virtual road where driving simulation can be conducted.

Subsequently, the vehicle information display object related to the real vehicle may be positioned in a specific area in the 3D virtual space (S203). The vehicle information display object may include the vehicle model, year, distance traveled, fuel state and other main state information, and intuitively convey the current state of the vehicle to the user. For example, the distance traveled information may help the user predict the vehicle inspection time, and the fuel state may be useful for determining the time to refuel. The information may be updated in real time to immediately reflect changes in the vehicle state.

In addition, the user may adjust the user view of the virtual space through the touch input to the display device or the in-vehicle control device, and display the corresponding view on the display (S303). The user may manipulate the object in the virtual space or adjust the user view by using drag-and-drop, rotation manipulation or zoom-in or zoom-out function.

In addition, the above-described devices may apply the current state of the driver device of the vehicle to the virtual vehicle and display the same (S403). In an example, the driver device may include tires, seats, steering wheels, air conditioners, headlights, side mirrors, rearview mirrors or interior lights, but is not limited thereto. The state of the corresponding device may be intuitively identified in the 3D virtual space. For example, when the tire pressure of the vehicle is abnormally low, a warning visually indicating the abnormal state may be displayed on the virtual vehicle. In addition to the state of the driver device, an evaluation value of the corresponding state may be displayed together. For example, when the tire pressure is 28 psi and its evaluation value is at the "caution" level, the "caution" warning sign and detailed response information may be provided at the location of the tire in the virtual space. For example, the response information may include the distance to a nearby vehicle repair shop, its location, a change of navigation destination or an air pressure change trend graph. Through this, the user may identify and deal with the part of the vehicle that require inspection quickly.

In addition, the state of the driving-related device may be displayed together with the virtual vehicle. The driving-related device may include a variety of main components of the vehicle such as engine oil, battery, transmission oil, coolant, belt chain, fuel filter, oxygen sensor, diesel particulate filter (DPF), brake oil, brake pad, steering oil, shock absorber or air conditioner filter. For example, when engine oil change is urgent, the corresponding information may be displayed together with the virtual vehicle. The state of the driver device and the driving-related device may be selectively displayed based on the frequency of use by the user or the degree of damage. Through this, the state of device with high importance may be provided to the user with priority. For example, when the brake pad is severely worn, the corresponding information may be emphasized and displayed with high priority, and when there is no problem with the amount of coolant or the brake pad, the corresponding information may be displayed with low priority and low frequency.

In this specification, the alarm may be provided for the item requiring replacement in the driver device or the driving-related device. For example, when the battery life is expected to expire, the user may be notified of the time to replace the battery along with the alarm message. Alternatively, the alarm function in the virtual space may notify the user of the appropriate time for maintenance or repair of the vehicle, thereby improving vehicle management efficiency.

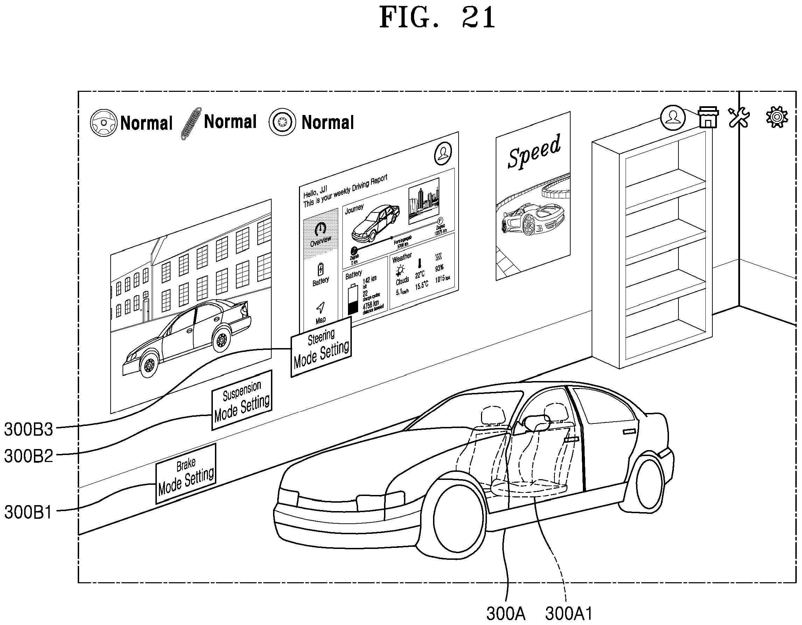

FIGS. 21 to 23 show that the state of the vehicle driver device and the driving-related device is applied and displayed to the virtual vehicle in the present disclosure. Referring to FIG. 21, it is shown that the seat 300A1 included in the driver device of the virtual vehicle 300A is moved at the same angle as the current seat angle of the vehicle. When the user changes the seat angle of the real vehicle or moves the seat forward or backward, either the service server or the in-vehicle control device may receive the corresponding information and equally change the seat position and angle of the vehicle in the virtual space.

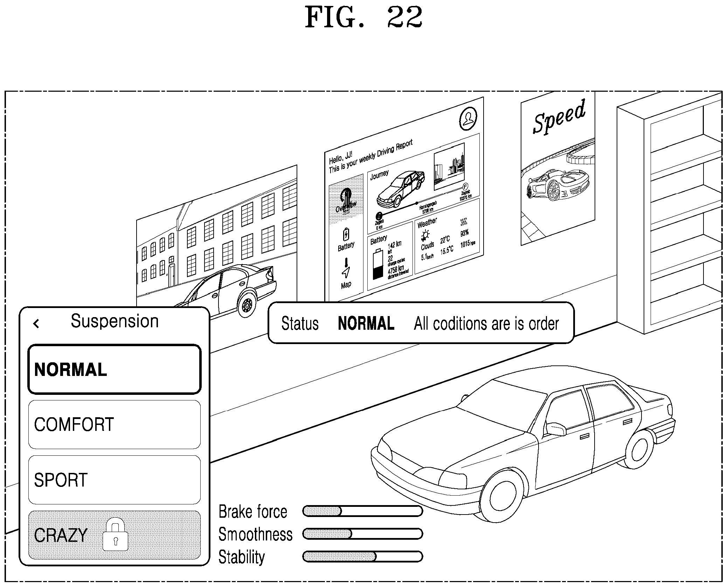

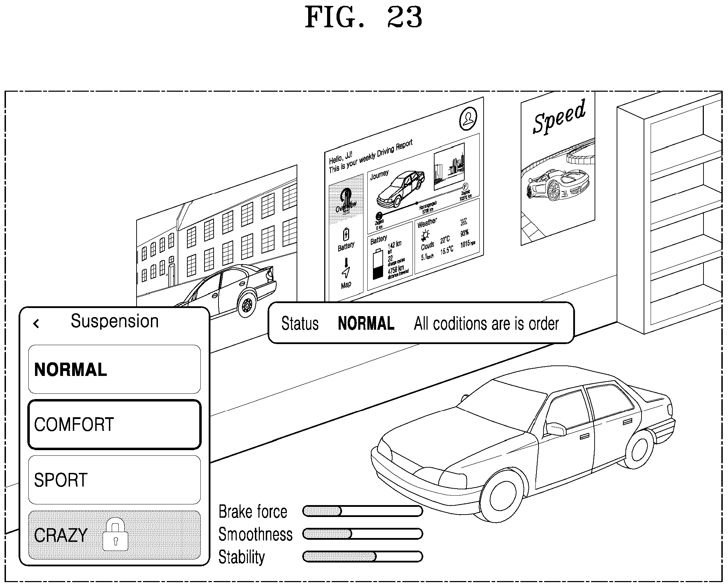

In addition, as shown in FIG. 21, in an example, the function of identifying and changing the current state and driving mode of the driving-related device such as brakes, suspension or steering wheel may be provided. Specifically, referring to FIGS. 22 and 23, the operation mode of the suspension of the virtual vehicle may be variously set, and the operation of the suspension in the set mode may be dynamically represented through the virtual vehicle. The virtual vehicle may have the outer surface of the vehicle processed in a transparent manner as shown in FIG. 22 to make it possible to visually identify the internal components (suspension, etc.) of the vehicle. In addition to the transparent function, to enhance the recognition of the characteristics in the corresponding driving mode, the dynamic movement and color of the components related to the corresponding driving mode may be differentiated from the surroundings, to allow the user to visually recognize how the corresponding components operate in the corresponding driving mode with ease. Referring to FIG. 23, the user may identify the movement of the suspension in each mode by changing between the normal mode and the comfort mode in order to see the operation of the suspension in the comfort mode.

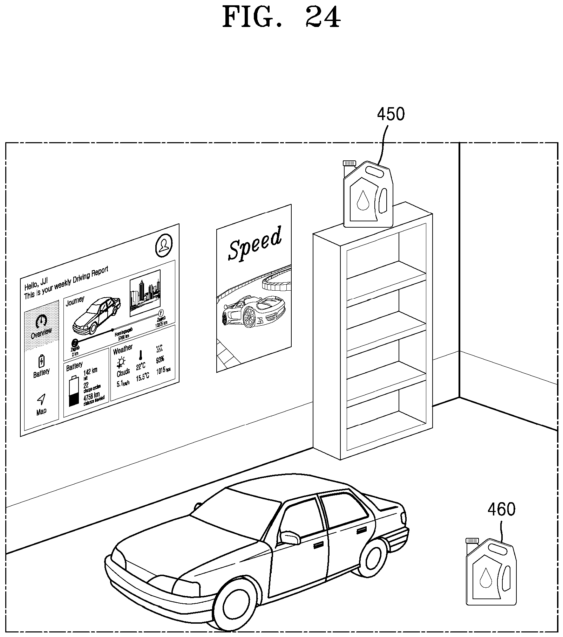

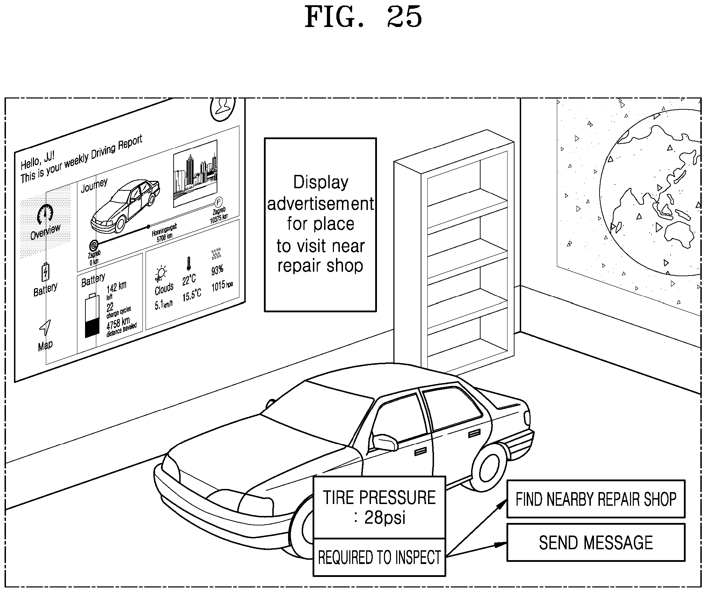

FIGS. 24 and 25 are diagrams illustrating the alarm or advertisement display function for the item requiring replacement among the driver device or the driving-related device in an embodiment of the present disclosure. Referring to FIG. 24, when the vehicle needs an engine oil change, the service server may create and display an engine oil change icon 450, 460 (including a link to an advertisement or a purchase page displaying a specific brand). The icon may be displayed in a fixed area of the display, like 460, or may be positioned as a 3D object at a specific location in the 3D virtual space, like 450. The icon 450 has an advantage of inducing the user to naturally recognize the need for engine oil change or purchase, and the icon 460 has an advantage of conveying the need for engine oil change more strongly because it is fixedly displayed on the top layer of the display.

Additionally, referring to FIG. 25, in addition to the alarm for the item requiring replacement among the driver device or the driving-related device, providing additional information will be described. For example, when there is a problem with tire pressure, a function tab for finding a nearby repair shop or sending a message to a designated contact (family, acquaintance, etc.) may be automatically activated. The user may contact somebody by sending a message to find out whether the current air pressure is okay and what to do about it. Additionally, as shown in FIG. 25, the display of advertisement in the 3D virtual space may be changed based on the information about the destination (the nearby repair shop) generated based on the corresponding alarm. The detail of the advertising object in the 3D virtual space may be temporarily changed to an advertisement related to the surrounding area, such as a place to visit on the basis of the nearby repair shop. That is, the detail of the advertisement may be changed when the air pressure inspection alarm ends or the nearest nearby repair shop is changed by the movement of the user.

### Dynamic change of user view with a change of vehicle state in 3D virtual space

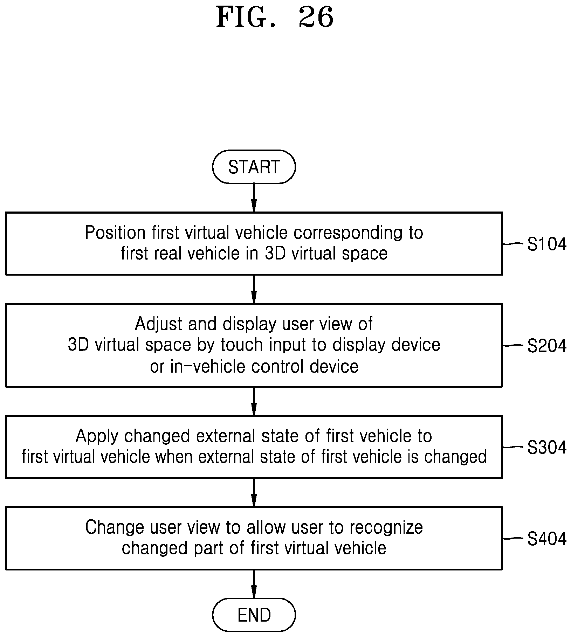

FIG. 26 is a flowchart of the method for providing infotainment based on the 3D virtual space through the in-vehicle display device according to another embodiment of the present disclosure. Referring to FIG. 26, the method for providing infotainment based on the 3D virtual space through the in-vehicle display device may include the step (S104) of positioning the first virtual vehicle corresponding to the first real vehicle in the 3D virtual space, the step (S204) of adjusting and displaying the user view of the 3D virtual space by the touch input to the display device or the in-vehicle control device, the step (S304) of applying the changed external state of the first vehicle to the first virtual vehicle when the external state of the first vehicle is changed, and the step (S404) of changing the user view to allow the user to recognize the changed part of the first virtual vehicle.

In an embodiment, the virtual vehicle corresponding to the real vehicle may be positioned in the virtual space (S104). The virtual vehicle may be created, reflecting the appearance and characteristics of the real vehicle, and positioned at a specific location in the virtual space. For example, the user may position his/her vehicle in the virtual garage, identify the appearance and state of the vehicle and conduct driving simulation. The virtual vehicle may reflect the color, number plate or external damage state of the vehicle, and provide intuitive information to the user by reflecting changes in real time. For example, when the open door of the real vehicle is detected, the corresponding state may be immediately applied to the virtual vehicle.

In an embodiment, the user view of the virtual space may be adjusted through the touch input to the display device or the in-vehicle control device (S204). The user may rotate the direction of the virtual vehicle in the virtual space through the touch interface or identify the details of a specific component by using the zoom-in or zoom-out function. For example, the user may zoom in on the tires of the virtual vehicle in the virtual space to visually inspect the wear state. In addition, the control device may be used to change the view of the virtual space, emphasize a specific part or see the vehicle at various angles.

In an embodiment, when the external state of the vehicle changes, the corresponding changed state may be applied to the virtual vehicle (S304). The external state change may be caused by damage to the exterior of the vehicle, component replacement, color change or other external factors. For example, when the headlight of the vehicle is broken, the headlight part may be emphasized in the virtual vehicle and the broken state may be visually provided to the user. This information may help the user immediately recognize the need for maintenance and repair of the vehicle and take appropriate measures. In addition, when the external state of the vehicle changes, the color of the advertising area may be adjusted to suit the environment of the garage. In the garage with dark background, correction may be automatically performed through AI to lower the brightness of the advertising content.

In an embodiment, the user view may be changed to allow the user to recognize the specific part of the virtual vehicle reflecting the changed external state (S404). The user view change may be set to the driver view, the passenger view or the vehicle's external administrator view according to the attributes of the changed part. For example, when the side mirror of the vehicle is damaged, the user view may be changed to the external view to identify the side mirror state in detail. In addition, the user view may be changed to the driver view to identify the side mirror damage state inside.

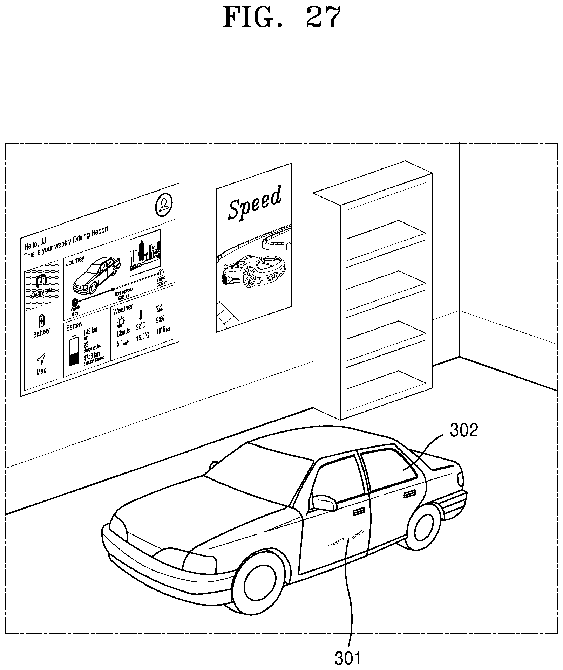

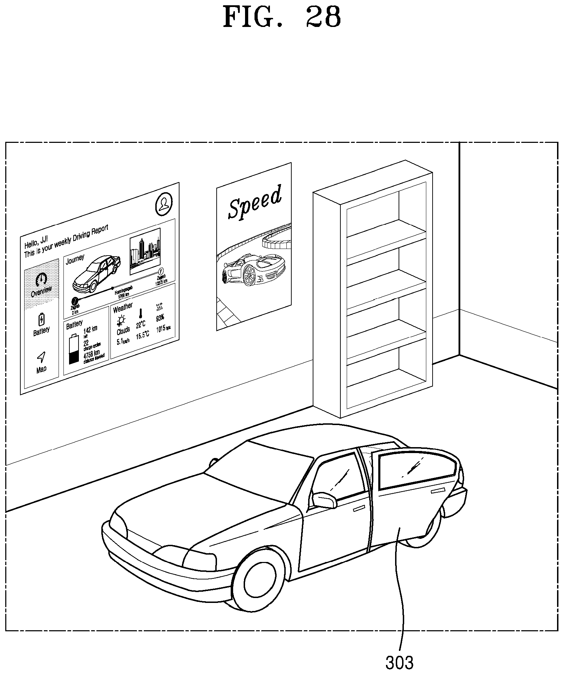

FIGS. 27 and 28 exemplarily show that the change of the real vehicle is applied and displayed to the virtual vehicle according to an embodiment of the present disclosure. Referring to FIG. 27, when a scratch 301 occurs on the side of the vehicle, the scratch may be reflected in the virtual vehicle by the user taking a photo of the real vehicle, uploading the acquired image to the service server or transmitting it to the in-vehicle control device, or the scratch may be generated based on impact and noise information applied to the vehicle. In addition, the passenger seat window 302 of the virtual vehicle may be opened and closed according to the degree of opening and closing of the real passenger seat window. In addition, as shown in FIG. 28, when the driver's seat door of the vehicle is open or not fully closed, this state may be equally applied and displayed to the virtual vehicle.

In addition, in an embodiment, the attributes of the changed vehicle part may include whether the vehicle can drive, the primary user of the corresponding vehicle part or whether it is possible to visually identify in the vehicle. For example, when the brake pad is severely worn, visual information indicating the state in which the vehicle is impossible to drive may be provided to the virtual vehicle along with the warning. Through this, the user may to efficiently determine the vehicle state and recognize the need for inspection quickly.

In an embodiment, the changed part of the virtual vehicle may be displayed in highlight. For example, when the tire pressure of the vehicle is low, color highlighting or blinking effect may be additionally provided to the corresponding tire part of the virtual vehicle to allow the user to immediately recognize. When highlighting is selected, a pop-up window that shows additional detailed information may be open.

In an embodiment, in the step of applying the changed external state to the virtual vehicle, the gear state of the vehicle may be identified and the external state may be determined based on it. For example, when the vehicle is in reverse gear, the reverse light in turn-on state may be reflected in the virtual vehicle. Through this, the user may intuitively understand the current situation of the vehicle in the virtual space.

In an embodiment, the advertising content may be dynamically changed depending on the distance traveled and the state of the vehicle. For example, when driving a short distance, a driver-customized insurance product may be advertised, and the corresponding advertisement may be positioned together with the vehicle in the virtual space. In the case of dynamic advertisement, the advertising area is fixed, but the user view may be automatically changed to continuously expose the vehicle and the advertisement. The advertisement may be designed in harmony with the virtual vehicle and virtual garage environment.

In an embodiment, the vehicle state information combined with the advertising content may help the user with practical assistance related to vehicle management. In the case of short distance, small vehicle insurance may be recommended, and information may be provided to make an optimal decision by comparing the advertisement with the vehicle state.

### Interface for changing virtual space representation style based on driving state

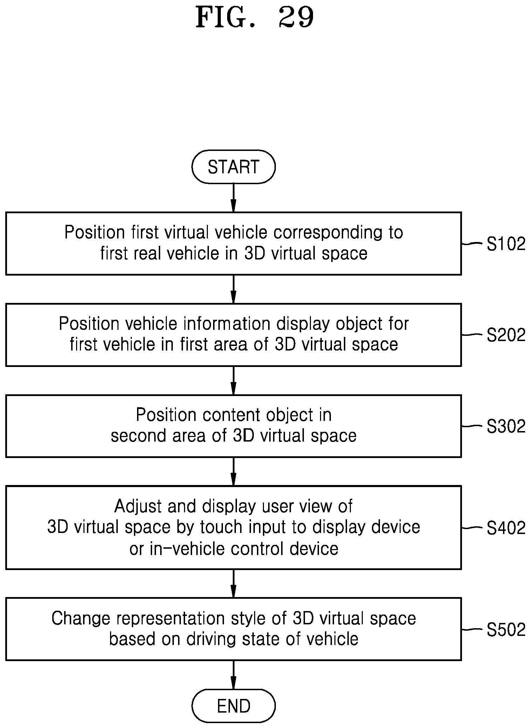

FIG. 29 is a flowchart of the method for providing infotainment based on the 3D virtual space through the in-vehicle display device according to another embodiment of the present disclosure. Referring to FIG. 29, the method for providing infotainment based on the 3D virtual space through the in-vehicle display device includes the step (S102) of positioning the first virtual vehicle corresponding to the first real vehicle in the 3D virtual space, the step (S202) of positioning the vehicle information display object for the first vehicle in the first area of the 3D virtual space, the step (S302) of positioning the content object in the second area of the 3D virtual space, the step (S402) of adjusting and displaying the user view of the 3D virtual space by the touch input to the display device or the in-vehicle control device, and the step (S502) of changing the representation style of the 3D virtual space based on the driving state of the vehicle.

In an embodiment, FIG. 29 may show a flowchart of the method for providing infotainment based on the 3D virtual space through the in-vehicle display device. The method may be performed by the computing device connected to the in-vehicle display device, and carried out to allow the user to intuitively identify and interact with the vehicle state and the content in the virtual space.

In an embodiment, the vehicle information display object may be positioned at a specific area in the 3D virtual space (S202). The vehicle information display object may include main data such as vehicle model, year, distance traveled or fuel state. The user may identify the state of the vehicle in real time through these information, and changes of the vehicle state may be updated immediately. For example, when the tire pressure of the vehicle is low, the corresponding information may be emphasized in the vehicle information display object.

In an embodiment, the content object may be positioned in other area of the 3D virtual space (S302). The content object may come in various types such as a video, an image, a web page link or an email, and the user may select the content object to identify or execute related information. For example, when the user selects the content object, the corresponding content may be played in the virtual space or opened as a new window on the display device.

In an embodiment, the user view of the 3D virtual space may be adjusted through the touch input to the display device or the in-vehicle control device (S402). The user may rotate the direction of the virtual vehicle in the virtual space or enlarge a specific part to see it in detail through the touch interface. For example, the engine state of the vehicle may be visually identified and the need for maintenance and repair may be determined. In addition, the view may be changed to a specific view in the virtual space, or the display may be reconfigured with respect to another object by using the in-vehicle control device.

In an embodiment, the representation style of the 3D virtual space may be changed based on the driving state of the vehicle (S502). For example, when the vehicle changes from P gear (parking) to D gear (driving) or the vehicle in D gear starts to move, the vehicle information display object may be fixed to a specific area of the display, or may be changed and displayed in the shape of a floating widget. Through this, it may be possible to allow the user to identify the main information while driving, and minimize the obstruction of the field of vision while driving.

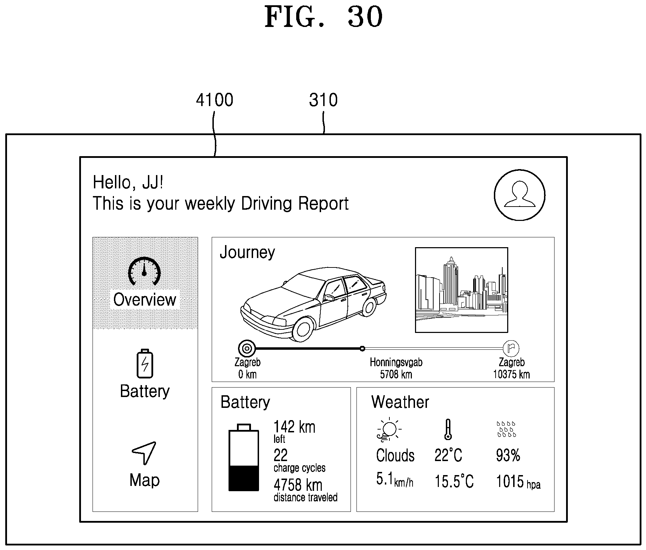

FIGS. 30 to 33 are diagrams showing the shape change of the 3D virtual space depending on the driving state according to an embodiment of the present disclosure. Referring to FIG. 30, when the vehicle is changed from P gear (parking) to D gear (driving) or the vehicle in D gear starts to move, the vehicle information display object 310 may be displayed on the front of the display and the 3D virtual space may not be displayed. In this instance, the 3D virtual space may gradually disappear from the display or appear in a blurred state behind the vehicle information display object.

In an embodiment, when the vehicle's gear starts to move from the D position, the content object and the vehicle information display object activated in the virtual space may be combined into a single scene and displayed on the display. For example, when the video content is playing while the vehicle is driving, the video content and the vehicle state information may be displayed on the display at the same time to allow the user to simultaneously identify the necessary information.

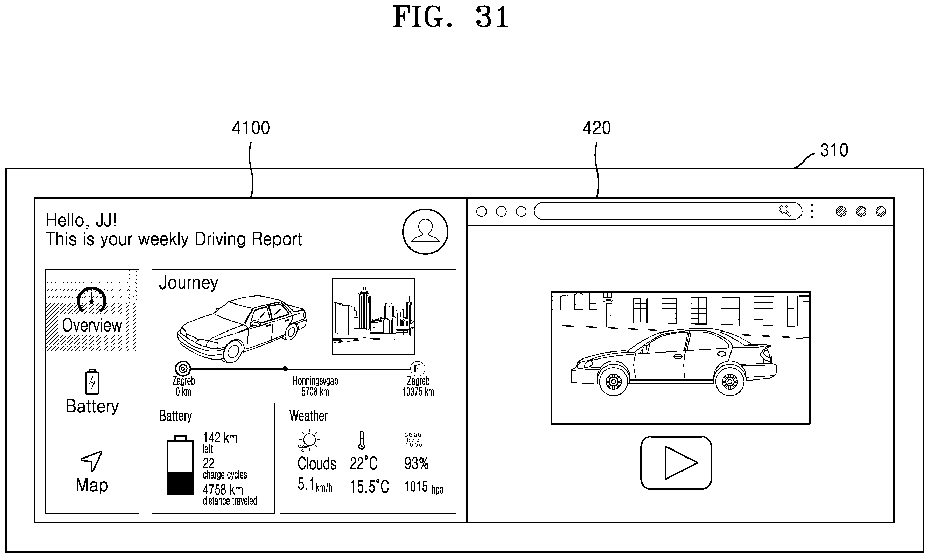

Referring to FIG. 31, as the vehicle starts to move, the user manipulation of the 3D virtual space may cause a danger while the vehicle is driving. Accordingly, only the vehicle information and the content object being executed in the 3D virtual space may be displayed on the display. In this instance, the display shape on the display may be the same as the shape in the 3D virtual space, or the shape after the selection of the corresponding object, i.e., the vehicle information display board 4100 or the web page 4200. In this instance, the web page may play a video or music.

In an embodiment, when the vehicle's gear is changed from P to D, the content objects in the 3D virtual space may be positioned and displayed on a grid-shaped 2D plane. In this placement, the order of the content objects may be automatically determined based on the frequency of use by the user, the size in the virtual space or the distance from the vehicle information display object. For example, frequently used email content may be positioned at the top of the grid, and less frequently used content may be positioned at the bottom.

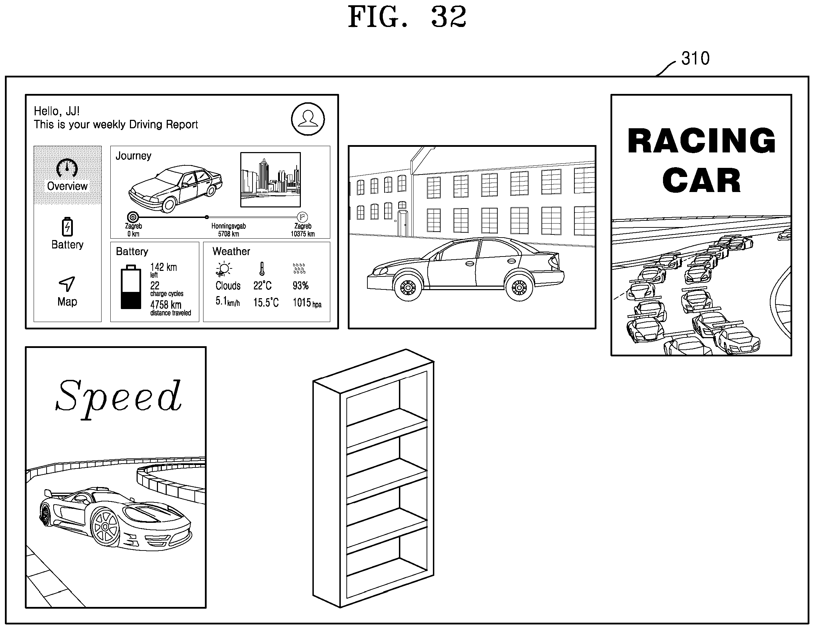

FIG. 32 shows that the objects of the 3D virtual space are displayed in the grid shape on the 2D plane by the driving of the vehicle according to an embodiment of the present disclosure. Referring to FIG. 32, all or at least some of objects (the vehicle information display object, the content object, etc.) present in the 3D virtual space may be changed to a 2D card shape and displayed on the display 310. While driving, the user may select each object arranged in the grid shape on the display to perform a desired function. For example, in FIG. 32, when the vehicle information display object (or the vehicle information display board) is selected, the corresponding display object may be displayed over the entire display area or at a predetermined ratio or more.

In an embodiment, when the vehicle's gear is changed from D to P, the virtual space may be displayed in the reference user view again, and the driving information collected during driving may be temporarily displayed on the display. For example, the distance traveled by the vehicle and the average fuel efficiency may be summarized and provided to allow the user to easily identify and analyze the driving data.

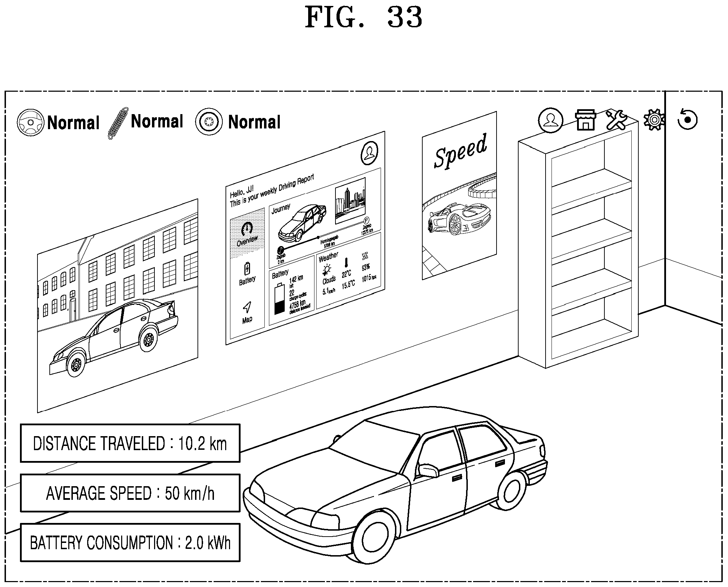

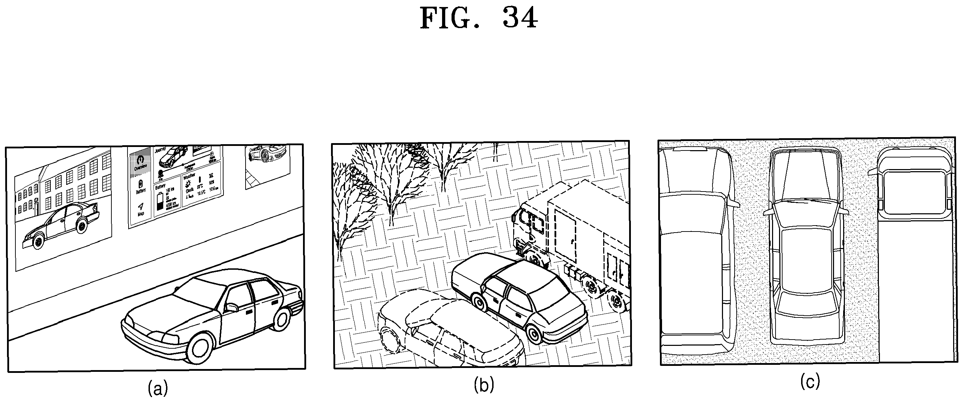

FIG. 33 shows the virtual space in which the driving information before stop is displayed when the vehicle stops driving in an embodiment of the present disclosure. The driving information may be temporarily displayed or may be removed by user manipulation after it is displayed. In FIG. 34, the driving information may include distance traveled, average speed or battery consumption, but this is provided by way of example, and additional driving-related information may be further displayed. In addition, when the driving information is displayed after driving, the detail of advertising information in the content object present within the user view in the virtual space may be displayed in relation to the displayed driving information. For example, in the case of long distance driving, advertisement may be created and provided as a necessary product or service for the long-distance driver.

In an embodiment, when the vehicle's gear is changed to R, the user view may be dynamically moved to face the top of the virtual vehicle. In this instance, the surrounding area of the vehicle may be displayed as a real-time vehicle surrounding image, and may be displayed on the display together with the virtual vehicle. Through this, the user may accurately identify the surrounding situation of the vehicle when driving backwards. That is, the around view function may be performed, but may be gradually changed to the surrounding camera image in the virtual space.

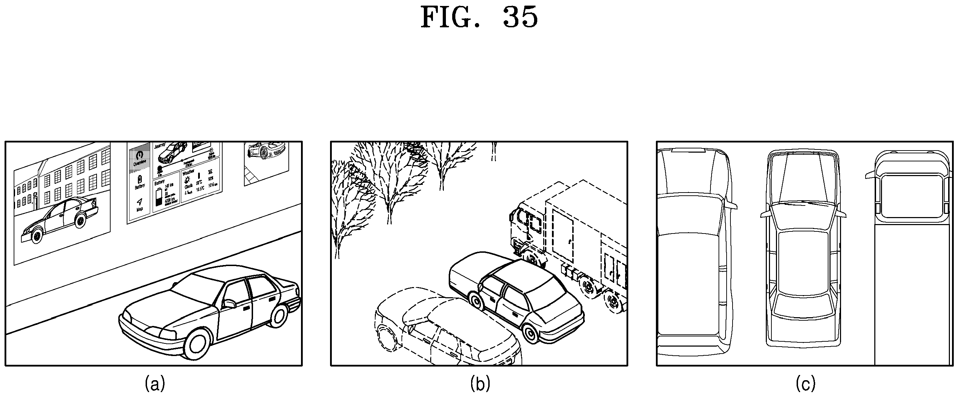

FIGS. 34 and 35 are diagrams illustrating the method of providing the around view based on the virtual space while driving backwards in an embodiment of the present disclosure. FIG. 34 shows that with the change of the user view, the virtual space is changed together with the surrounding camera image, and FIG. 35 shows that with the change of the user view, the virtual object is created in the virtual space while the virtual space is maintained.

Referring to FIG. 34, the user view gradually changes in a direction facing from top to bottom as shown in FIG. 34(A) to FIG. 34(C), objects (Vehicle 1, Vehicle 2, tree, etc.) in the surrounding area acquired through the vehicle's camera are represented, and the virtual space is gradually changed to the real space. However, the virtual vehicle may be maintained.

In another embodiment, when the gear is in the R state, a physical object (for example, an obstacle or a road sign) around the vehicle may be recognized and displayed as the virtual object in the virtual space. For example, as shown in FIG. 35, when the gear is changed to R, the surroundings of the vehicle may be detected through the camera or RADAR/LiDAR, and the surrounding object may be identified based on the detected information. The identified object (for example, the vehicle) may be displayed as the virtual object in the virtual space and visually provided to the user. In this case, the user may recognize the surrounding area of the vehicle through the virtual space and control the real vehicle while viewing the virtual vehicle.

The around view function based on the virtual space described in FIGS. 34 and 35 may be extended in a new way for enhancing the exposure of the advertising content and interaction with the user. When the vehicle drives in reverse, all realistic advertisements liked to the surrounding objects (for example, stores, billboards) displayed on the around view display may be displayed in the virtual space together. For example, signboard information of the nearby store detected while driving backwards may be created as the virtual object in the virtual space, and when the user selects it, detailed information (business hours, discount information, etc.) of the store may be displayed on the display. The advertisement may be designed to be automatically adapted according to the reverse speed and location of the vehicle and naturally incorporated into the virtual space.

Additionally, the advertisement may be implemented to enable real-time interaction. For example, when the user selects the virtual object, coupon or discount related to the corresponding advertisement may be immediately displayed on the vehicle display, and through this, the user may be guided to the nearby store or connected to an online purchase page of the selected item. The advertisement may be linked to the state of the vehicle, and customized advertisement may be provided under the prediction of the user's needs based on the driving data (for example, movement distance, fuel state, etc.).

In addition, as described in FIG. 35, the virtual object created based on the physical object around the vehicle may be used as a new criterion for the advertisement calculation method. For example, the advertiser may receive the exposure frequency for a specific location and interaction data of the user and calculate the advertising cost. Through this, the advertiser may design more efficient advertising campaigns by using the field of vision and behavior data of the vehicle user.

Meanwhile, the advertisement exposure method based on the virtual space may be developed in a direction of increasing the realistic effect of the inside of the vehicle. For example, 3D rendering technology may be applied to make the object in the virtual space more realistic in order to enhance the visual texture of the advertising content. The size, transparency or brightness of the advertisement may be adjusted according to the distance between the user and the virtual object, and the adaptive sound effect may be applied according to the surrounding environment to increase the immersion of the advertisement.

This method may be performed by the computing device connected to the in-vehicle display device, and allow the user to identify the information related to the vehicle intuitively in real time.

The embodiments described hereinabove may be implemented, at least in part, as a computer program and recorded in a computer-readable recording medium. The computer-readable recording medium for recording the program for implementing the embodiments includes any type of recording device in which computer-readable data is stored. Examples of the computer-readable recording medium include ROM, RAM, CD-ROM, magnetic tape, floppy disks, and optical data storage devices. Furthermore, the computer-readable recording medium may be distributed over computer systems connected via a network, to store and execute computer-readable codes in a distribution fashion. Additionally, the functional programs, codes and code segments for implementing this embodiment will be easily understood by persons having ordinary skill in the technical field to which this embodiment belongs.

While the present disclosure has been hereinabove described with reference to the embodiments shown in the drawings, this is provided for illustration purposes only and it will be appreciated by those having ordinary skill in the art that various modifications and variations may be made thereto. However, it should be noted that such modifications fall in the technical protection scope of the present disclosure. Therefore, the true technical protection scope of the present disclosure should be defined as including other embodiments and other examples by the technical spirit of the appended claims and the equivalents to the appended claims.

## Claims

1. A method for providing infotainment based on a three-dimensional (3D) virtual space through an in-vehicle display device, wherein the method is performed by a computing device, the method comprising the steps of:
positioning a first virtual vehicle corresponding to a first real vehicle in the 3D virtual space;
positioning a vehicle information display object for the first vehicle in a first area of the 3D virtual space;
positioning a content object in a second area of the 3D virtual space; and
adjusting and displaying a user view of the 3D virtual space by a touch input to the display device or an in-vehicle control device.

2. The method for providing infotainment based on the 3D virtual space according to claim 1,
wherein the content object includes advertising content or non-advertising content,
wherein the advertising content is determined based on a state of the first vehicle, driving information of the first vehicle and passenger information of the first vehicle, and
wherein the non-advertising content includes a link for connection to at least one of an email, a messenger, a video, an image or a specific Uniform Resource Locator (URL).

3. The method for providing infotainment based on the 3D virtual space according to claim 2,
wherein the non-advertising content is created by a user in the 3D space, pre-positioned by a service administrator, or automatically created based on at least one of the state of the first vehicle, the driving information of the first vehicle or the passenger information of the first vehicle.

4. The method for providing infotainment based on the 3D virtual space according to any one of claims 1 to 3, further comprising the step of:
providing a theme change mode for changing a theme of the 3D virtual space,
wherein the theme that can be changed includes a theme pre-installed in the vehicle by a manufacturer of the vehicle or a theme downloaded into the vehicle for free or after payment.

5. The method for providing infotainment based on the 3D virtual space according to claim 4,
wherein when changing the theme, a location of the vehicle information display object is maintained based on a location and direction of the first virtual vehicle, and
wherein a location, shape and size of the content object can be changed according to attributes of the content object and attributes of the theme.

6. The method for providing infotainment based on the 3D virtual space according to any one of claims 1 to 5,
wherein a representation of the first virtual vehicle is determined based on a vehicle information input from a user, and can be updated based on an image of the first vehicle received from an external device.

7. The method for providing infotainment based on the 3D virtual space according to any one of claims 1 to 6,
wherein a location and size of the vehicle information display object and the content object in the 3D virtual space can be changed based on a user input, and the user input includes at least one of a drag-and-drop, a short touch, a long touch or a virtual arrow-based manipulation.

8. The method for providing infotainment based on the 3D virtual space according to claim 7,
wherein when at least a part of the content object overlaps the vehicle information display object, the content object is pushed out of the vehicle information display object to avoid the overlap, and
wherein a gap between the pushed content object and the vehicle information display object is determined based on complexity of at least one of the vehicle information display object, the content object or surface in the gap.

9. A computer program stored in a computer-readable medium to enable a computer to perform the method defined in any one of claims 1 to 8.

10. An apparatus for providing infotainment based on a three-dimensional (3D) virtual space through an in-vehicle display device to perform the method defined in any one of claims 1 to 8.

## Amended claims

### Amended claims in accordance with Rule 137(2) EPC.

1. A method for providing infotainment based on a three-dimensional (3D) virtual space through an in-vehicle display device, wherein the method is performed by a computing device, the method comprising the steps of:
positioning a first virtual vehicle having three-dimensional spatial information and corresponding to a first real vehicle in the 3D virtual space;
positioning a vehicle information display object for the first vehicle that is represented by two-dimensional spatial information in a first area of the 3D virtual space;
positioning a content object in a second area of the 3D virtual space;
adjusting a user view of the 3D virtual space by a touch input to the display device or an in-vehicle control device; and
displaying the first virtual vehicle, the vehicle information display object represented by two-dimensional spatial information, and the content object such that relative sizes and relative positions thereof are changed according to the adjusted view, wherein a spatial relationship among the first virtual vehicle, the vehicle information display object, and the content object in the three-dimensional space is maintained.

2. The method for providing infotainment based on the 3D virtual space according to claim 1,
wherein the content object includes advertising content or non-advertising content,
wherein the advertising content is determined based on a state of the first vehicle, driving information of the first vehicle and passenger information of the first vehicle, and
wherein the non-advertising content includes a link for connection to at least one of an email, a messenger, a video, an image or a specific Uniform Resource Locator (URL).

3. The method for providing infotainment based on the 3D virtual space according to claim 2,
wherein the non-advertising content is created by a user in the 3D space, pre-positioned by a service administrator, or automatically created based on at least one of the state of the first vehicle, the driving information of the first vehicle or the passenger information of the first vehicle.

4. The method for providing infotainment based on the 3D virtual space according to claim 1, further comprising the step of:
providing a theme change mode for changing a theme of the 3D virtual space,
wherein the theme that can be changed includes a theme pre-installed in the vehicle by a manufacturer of the vehicle or a theme downloaded into the vehicle for free or after payment.

5. The method for providing infotainment based on the 3D virtual space according to claim 4,
wherein when changing the theme, a location of the vehicle information display object is maintained based on a location and direction of the first virtual vehicle, and
wherein a location, shape and size of the content object can be changed according to attributes of the content object and attributes of the theme.

6. The method for providing infotainment based on the 3D virtual space according to claim 1,
wherein a representation of the first virtual vehicle is determined based on a vehicle information input from a user, and can be updated based on an image of the first vehicle received from an external device.

7. The method for providing infotainment based on the 3D virtual space according to claim 1,
wherein a location and size of the vehicle information display object and the content object in the 3D virtual space can be changed based on a user input, and the user input includes at least one of a drag-and-drop, a short touch, a long touch or a virtual arrow-based manipulation.

8. The method for providing infotainment based on the 3D virtual space according to claim 7,
wherein when at least a part of the content object overlaps the vehicle information display object, the content object is pushed out of the vehicle information display object to avoid the overlap, and
wherein a gap between the pushed content object and the vehicle information display object is determined based on complexity of at least one of the vehicle information display object, the content object or surface in the gap.

9. A computer program stored in a computer-readable medium to enable a computer to perform the method defined in any one of claims 1 to 8.

10. An apparatus for providing infotainment based on a three-dimensional (3D) virtual space through an in-vehicle display device to perform the method defined in any one of claims 1 to 8.
